**Europäisches Patentamt**

**European Patent Office**

**Office européen des brevets**

(11) Veröffentlichungsnummer: **0 339 433 B1**

## (12) EUROPÄISCHE PATENTSCHRIFT

(45) Veröffentlichungstag der Patentschrift: **17.08.94**

(21) Anmeldenummer: **89106906.4**

(22) Anmeldetag: **18.04.89**

Verbunden mit 89904555.3/0413704 (europäische Anmeldenummer/Veröffentlichungsnummer) durch Entscheidung vom 06.06.91.

Die Akte enthält technische Angaben, die nach dem Eingang der Anmeldung eingereicht wurden und die nicht in dieser Patentschrift enthalten sind.

(51) Int. Cl.5: **C09D 5/02**, C09D 175/04, C09D 167/00

(54) **Wasserverdünnbare Einbrennlacke und ihre Verwendung als Füllermaterial und Steinschlagzwischengrund sowie Verfahren zur Lackierung von Automobilkarosserien.**

(30) Priorität: **23.04.88 DE 3813866**

(43) Veröffentlichungstag der Anmeldung:
**02.11.89 Patentblatt 89/44**

(45) Bekanntmachung des Hinweises auf die Patenterteilung:
**17.08.94 Patentblatt 94/33**

(84) Benannte Vertragsstaaten:
**AT BE CH DE ES FR GB IT LI NL SE**

(56) Entgegenhaltungen:
**EP-A- 0 228 003
DE-A- 3 108 861
US-A- 4 423 179**

(73) Patentinhaber: **BASF Lacke + Farben AG
Glasuritstrasse 1
D-48165 Münster-Hiltrup (DE)**

(72) Erfinder: **Weidemeier, Klaus**

**Liebigweg 9 a
D-4400 Münster (DE)**
Erfinder: **Hille, Hans-Dieter
In der Schlade 24
D-5060 Bergisch Gladbach (DE)**
Erfinder: **Schmidt, Winfried, Dr.
Spichernstrasse 36 c
D-4400 Münster (DE)**
Erfinder: **Müller, Bodo, Dr.
Mergentheimer Strasse 8
D-8700 Würzburg (DE)**

(74) Vertreter: **Münch, Volker, Dr. et al
BASF Lacke + Farben AG
Patente/Lizenzen/Dokumentation
Postfach 61 23
D-48136 Münster (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wasserverdünnbare Einbrennlacke auf der Basis einer Polyurethan-, Polyester- und ggf. Aminoplastharz-Mischung als Bindemittel sowie die Verwendung dieser Einbrennlacke als Füllermaterial und Steinschlagzwischengrund.

Außerdem betrifft die Erfindung auch ein Verfahren zur Lackierung von Automobilkarosserien, bei dem

(1) ein Elektrotauchlack appliziert und eingebrannt wird,

(2) ein Füllermaterial appliziert und eingebrannt wird und

(3) eine ein- oder mehrschichtige Decklackierung appliziert und eingebrannt wird.

In einem weiteren Verfahren wird zusätzlich zwischen der Verfahrensstufe (1) und (2) ein wasserverdünnbarer Einbrennlack als Steinschlagzwischengrund appliziert und eingebrannt.

Bei der Lackierung von Automobilkarosserien werden an die als Füllermaterial und Steinschlagzwischengrund eingesetzten Einbrennlacke hohe Anforderungen gestellt. Die als Füllermaterialien einsetzbaren Einbrennlacke müssen insbesondere auch bei hohem Spritzfestkörper ($\geq$ 40 Gew.-% mit Hilfe von elektrostatischen bzw. elektrostatisch unterstützten Spritzverfahren problemlos appliziert und ohne störende Bläschenbildung eingebrannt werden können sowie Füllerschichten liefern, die optimale Zwischenhaftungseigenschaften zeigen, d.h. einerseits muß die Füllerschicht gut auf der Elektrotauchlackierung haften und andererseits muß die Decklackschicht gut auf der Füllerschicht haften.

Eine wichtige Aufgabe der Füllerschicht besteht darin, Unebenheiten aufzufüllen und abzudecken, um den Untergrund für den nachfolgenden Decklack zu egalisieren. Diese Abdeckung von Untergrundstrukturen und Substratfehlern muß bewerkstelligt werden, ohne daß an der Füllerschicht umfangreiche Schleifarbeiten durchgeführt werden, eine Forderung, die nur erfüllt werden kann, wenn das Füllermaterial gute Verlaufseigenschaften zeigt.

Neben der optischen Qualität sind auch wichtige technische Eigenschaften der Lackierung, wie z.B. Korrosionsschutz und vor allem die Resistenz gegen Steinschlag und andere mechanische Angriffe, ganz entscheidend von der Qualität der Füllerschicht abhängig.

Bei der Verwendung von wasserverdünnbaren Einbrennlacken als Steinschlagzwischengrund besteht die Hauptforderung an diese Lacke darin, die Resistenz der gesamten Lackierung gegen Steinschlag deutlich zu verbessern.

Bisher wurden überwiegend Einbrennlacke auf Basis organischer Lösungsmittel als Füllermaterialien und Steinschlagzwischengrund verwendet.

Die Lackindustrie ist aus ökonomischen und ökologischen Gründen bestrebt, die lösungsmittelhaltigen Füllermaterialien durch wasserverdünnbare Füllermaterialien zu ersetzen.

So sind aus der DE-OS 35 37 855 wasserverdünnbare Einbrennfüller auf der Basis saurer Polykondensate bekannt, die durch Umsetzung von Aminoplasten, Polyestern, mehrwertigen Alkoholen, cyclischen Polycarbonsäuren und Acrylatharzen hergestellt werden.

Die aus dem Stand der Technik bekannten Wasserfüller auf Alkydharzbasis weisen jedoch erhebliche Mängel auf. So existieren Haftungsschwächen sowohl zu verschiedenen KTL-Untergründen als auch zu verschiedenen Decklacken und die bei - durch die Spritzapplikation - vorgegebener Viskosität erzielbaren Festkörpergehalte liegen viel zu niedrig. Insbesondere muß aber die Steinschlagbeständigkeit der resultierenden Beschichtung weiter verbessert werden.

Außerdem sind seit einigen Jahren wäßrige Beschichtungsmittel, aber keine Füllermaterialien, auf Polyurethan-Basis bekannt, die zu Überzügen mit guten technischen Eigenschaften führen. So beschreibt die US-PS 4,423,179 wäßrige Beschichtungsmittel, die mit Hilfe üblicher Methoden auf eine Vielzahl von Substraten aufgebracht werden können. Die erhaltenen Überzüge weisen eine verbesserte Flexibilität und Lösungsmittelbeständigkeit auf. Die Hauptkomponenten dieser Beschichtungsmittel sind ein Aminoplastharz und ein Polyurethan mit einer OH-Zahl > 10, das aus einem Diisocyanat und einem Polyesterpolyol mit einem mittleren Molekulargewicht zwischen 1200 und 1500 hergestellt wird. Erfindungswesentlich ist die Verwendung von Dimerfettsäuren zum Aufbau des Polyesterpolyols.

Aus der US-PS 3,954,899 sind ebenfalls Beschichtungsmittel auf der Basis hydroxylgruppenhaltiges Polyurethan, Aminoplastharz sowie ggf. hydroxylgruppenhaltige Verbindung, wie z.B. Polyester, bekannt, die sowohl als wäßrige Dispersion als auch auf organischer Lösemittelbasis eingesetzt werden können. Verwendet werden diese Beschichtungsmittel aber insbesondere für die Beschichtung von Gummi oder gummielastischen Kunststoffen, wie z.B. Polyurethanen oder Polyethylenschaumstoffen. Hinweise auf die Eignung bzw. Verwendung dieser Beschichtungsmittel als Füllermaterial oder Steinschlagzwischengrund finden sich in dieser Schrift nicht.

Der Erfindung liegt somit die Aufgabe zugrunde, wasserverdünnbare Einbrennlacke zur Verfügung zu stellen, die als Füllermaterial oder Steinschlagzwischengrund einsetzbar sind und die die obengenannten Forderungen optimal erfüllen, d.h. sie müssen insbesondere mit Hilfe von elektrostatischen bzw. elektrostatisch unterstützten Spritzverfahren applizierbar sein, bei einem Festkörpergehalt von über 40 Gew.-% eine Viskosität von 20 bis 30 s, gemessen im Auslaufbecher nach DIN 4 aufweisen, gute Verlaufseigenschaften zeigen, ohne Bläschenbildung einbrennbar sein, lagerstabil sein und Filme liefern, die optimale Zwischenhaftungseigenschaften zu unterschiedlichen Grundierungen und Decklacken aufweisen. Insbesondere sollen sie zu Lackierungen mit sehr guter Steinschlagbeständigkeit führen.

Diese Aufgabe wird erfindungsgemäß gelöst durch Bereitstellen von wasserverdünnbaren Einbrennlakken auf der Basis einer Polyurethan-, Polyester- und ggf. Aminoplastharz-Mischung als Bindemittel, die dadurch gekennzeichnet sind, daß die Einbrennlacke als Bindemittel eine Kombination aus

(I) 20 bis 70 Gew.-%, bevorzugt 40 bis 60 Gew.-%, eines Polyurethanharzes, das eine Säurezahl von 15 bis 35, bevorzugt 20 - 30, aufweist und herstellbar ist, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 20 bis 70 Gew.-%, bevorzugt 25 bis 50 Gew.-%, eines epoxidharzmodifizierten, wasserverdünnbaren Polyesters, der herstellbar ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol, - wobei mindestens 10 Mol %, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50 - 120, eine OH-Zahl von 56 - 320, vorzugsweise 80 - 200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt, und

(III) 0 bis 20 Gew.-% eines wasserverdünnbaren Aminoplastharzes

enthalten , wobei die Summe der Komponenten (I) bis (III) jeweils 100 Gew.-% beträgt.

Das erfindungsgemäß in einer Menge von 20 bis 70 Gew.-%, bevorzugt 40 bis 60 Gew.-%, als Bindemittelkomponente I verwendete, in Wasser dispergierbare Polyurethanharz ist aus der DE 35 45 618 bekannt. Es wird erhalten, indem 4,0 bis 1,9 mol der Komponente (Ia), 5,6 bis 11,2 mol der Komponente (Ib) und 1,6 bis 3,7 molder Komponente (Ic) zu einem endständige Isocyanatgruppen aufweisenden Zwischenprodukt umgesetzt werden. Die Umsetzung der Komponenten (Ia), (Ib) und (Ic) erfolgt nach den gut bekannten Verfahren der organischen Chemie (vgl. z.B. Kunststoff-Handbuch, Band 7: Polyurethane, herausgegeben von Dr. Y. Oertel, Carl Hanser Verlag, München-Wien 1983), wobei bevorzugt eine stufenweise Umsetzung der Komponenten (z.B. Bildung eines ersten Zwischenproduktes aus den Komponenten (Ia) und (Ib), das dann mit (Ic) zu einem zweiten Zwischenprodukt umgesetzt wird) durchgeführt wird.

Es ist aber auch eine gleichzeitige Umsetzung der Komponenten (Ia), (Ib) und (Ic) möglich.

Die Umsetzung wird bevorzugt in Lösungsmitteln durchgeführt, die gegenüber Isocyanatgruppen inert und

EP 0 339 433 B1

mit Wasser mischbar sind. Vorteilhaft werden Lösungsmittel eingesetzt, die neben den oben beschriebenen Eigenschaften auch noch gute Löser für die hergestellten Polyurethane sind und sich aus wäßrigen Mischungen leicht abtrennen lassen. Besonders gut geeignete Lösungsmittel sind Aceton und Methylethylketon.

Als Komponente (Ia) können prinzipiell alle bei der Herstellung von Bindemitteln auf Polyurethanbasis gebräuchliche Polyether- und/oder Polyesterpolyole mit einem Molekulargewicht von 400 bis 3000 (Zahlenmittel) eingesetzt werden. Bevorzugt werden Polyether- und/oder Polyesterdiole eingesetzt.

Als Beispiele für Polyetherpolyole seien Polyoxyalkylenpolyole, insbesondere Poly(oxypropylen)glykole mit einem Molekulargewicht von 400 bis 3000 (Zahlenmittel) genannt. Die als Komponente (Ia) verwendbaren Polyesterpolyole können nach allgemein bekannten Methoden durch Veresterung von organischen Dicarbonsäuren oder ihrer Anhydride mit organischen Diolen hergestellt werden. Dabei können auch Säure- und/oder Hydroxylkomponenten mitverwendet werden, deren Funktionalität größer als 2 ist.

Es können auch Polyesterdiole, die sich von Lactonen ableiten, als Komponente (Ia) verwendet werden. Diese Produkte erhält man beispielsweise durch Umsetzung von $\epsilon$ -Caprolacton mit einem Diol. Solche Produkte sind in der US-PS 3169945 beschrieben.

Es können als Komponente (Ia) auch Polyesterpolyole eingesetzt werden, deren Säurekomponente zumindest zum Teil aus dimeren Fettsäuren besteht. Derartige Systeme sind beispielsweise in der US-PS 4,423,179 beschrieben.

Als Komponente (Ib) können für die Herstellung der Polyurethandispersion beliebige organische Diisocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)-methan, Bis-(4-isocyanatophenyl)-methan, 4,4'-Diisocyanatodiphenylether und 2,3-Bis-(8-isocyanatooctyl)-4-octyl-5-hexyl-cyclohexen.
Bevorzugt werden aliphatische, besonders bevorzugt cycloaliphatische Diisocyanate eingesetzt.

Als Komponente (Ic) werden Verbindungen eingesetzt, die zwei gegenüber Isocyanatgruppen reaktive Gruppen enthalten, wobei zumindest ein Teil der als Komponente (Ic) eingesetzten Verbindungen mindestens eine zur Anionenbildung befähigte Gruppe aufweist, die vorzugsweise vor der Umsetzung mit einem tertiären Amin neutralisiert worden ist.

Durch Einstellung eines bestimmten Mischungsverhältnisses zwischen den zur Anionenbildung befähigten Gruppen enthaltenden und den von diesen Gruppen freien Verbindungen kann der Anteil an ionischen Gruppen im Polyurethanmolekül gesteuert werden.

Geeignete mit Isocyanatgruppen reagierende Gruppen sind insbesondere Hydroxylgruppen. Die Verwendung von Verbindungen, die primäre oder sekundäre Aminogruppen enthalten, kann einen negativen Einfluß auf die oben beschriebene Verarbeitbarkeit der Dispersionen haben. Art und Menge von gegebenenfalls einzusetzenden aminogruppenhaltigen Verbindungen sind vom Durchschnittsfachmann durch einfach durchzuführende Routineuntersuchungen zu ermitteln.

Als zur Anionenbildung befähigte Gruppen kommen vor allem Carboxyl- und Sulfonsäuregruppen in Betracht. Diese Gruppen können vor der Umsetzung mit einem tertiären Amin neutralisiert werden, um eine Reaktion mit den Isocyanatgruppen zu vermeiden.

Als Verbindung, die mindestens zwei mit Isocyanatgruppen reagierende Gruppen und mindestens eine zur Anionenbildung befähigte Gruppe enthält, sind beispielsweise Dihydroxypropionsäure, Dimethylolpropionsäure, Dihydroxybernsteinsäure oder Dihydroxybenzoesäure geeignet. Geeignet sind auch die durch Oxydation von Monosacchariden zugänglichen Polyhydroxysäuren, z.B. Glukonsäure, Zuckersäure, Schleimsäure, Glukuronsäure und dergleichen.

Aminogruppenhaltige Verbindungen sind beispielsweise $\alpha,\delta$ - Diaminovaleriansäure, 3,4-Diaminobenzoesäure, 2,4-Diamino-toluol-sulfonsäure-(5), 4,4'-Diamino-di-phenylethersulfonsäure und dergleichen.

Geeignete tertiäre Amine zur Neutralisation der anionischen Gruppen sind beispielsweise Trimethylamin, Triethylamin, Dimethylanilin, Diethylanilin, Triphenylamin, Dimethylethanolamin und dergleichen. Erfolgt die Neutralisation in organischer Phase, wird bevorzugt Triethylamin eingesetzt, bei der Neutralisation in wäßriger Phase bevorzugt Dimethylethanolamin.

Als Verbindungen, die zwei gegenüber Isocyanatgruppen reaktive Gruppen aufweisen, jedoch frei von zur Anionenbildung befähigten Gruppen sind, können beispielsweise niedermolekulare Diole oder Diamine mit primären oder sekundären Aminogruppen eingesetzt werden.

4

Das aus den Komponenten (Ia), (Ib) und (Ic) gebildete isocyanatgruppenhaltige Zwischenprodukt wird mit dem mindestens drei Hydroxylgruppen enthaltenden Polyol umgesetzt. Die Umsetzung wird vorzugsweise durch die Stöchiometrie der eingesetzten Komponenten so gesteuert, daß es zu Kettenverlängerungen und ggf. auch zu Verzweigungen der Bindemittelmoleküle kommt. Bei dieser Umsetzung muß sorgfältig darauf geachtet werden, daß keine vernetzten Produkte erhalten werden (vgl. z.B. US-PS 4,423,179),

Für diese Umsetzung geeignete Polyole sind beispielsweise Trimethylolpropan, Glycerin, Erythrit, Mesoerythrit, Arabit, Adonit, Xylit, Mannit, Sorbit, Dulcit, Hexantriol, (Poly)Pentaerythritol usw.

Ganz besonders gute Ergebnisse können erzielt werden, wenn Trimethylolpropan als Polyol eingesetzt wird. Man kann auch alle vier Komponenten (Ia), (Ib), (Ic) und Polyol gleichzeitig umsetzen, wobei aber unbedingt darauf zu achten ist, daß unvernetzte Polyurethane erhalten werden.

Nach der Umsetzung des aus (Ia), (Ib) und (Ic) erhaltenen Zwischenproduktes mit der Polyolkomponente, die vorzugsweise in einem gegenüber Isocyanatgruppen inerten, mit Wasser mischbaren, das entstehende Polyurethan gut lösenden und aus wäßrigen Mischungen gut abtrennbaren Lösungsmitteln (z.B. Aceton oder Methylethylketon) durchgeführt worden ist und gegebenenfalls noch durchzuführenden Neutralisierung der zur Anionenbildung befähigten Gruppen wird das Reaktionsprodukt in eine wäßrige Phase überführt. Das kann zum Beispiel durch Dispergierung des Reaktionsgemisches in Wasser und Abdestillieren der unter 100°C siedenden organischen Lösungsmittelanteile geschehen.

Unter wäßriger Phase ist Wasser, das auch noch organische Lösungsmittel enthalten kann, zu verstehen. Als Beispiele für Lösungsmittel, die im Wasser vorhanden sein können, seien heterocyclische, aliphatische oder aromatische Kohlenwasserstoffe, ein- oder mehrwertige Alkohole, Ether, Ester und Ketone, wie zum Beispiel N-Methylpyrrolidon, Toluol, Xylol, Butanol, Ethyl- und Butylglykol sowie deren Acetate, Butyldiglykol, Ethylenglykoldibutylether, Ethylenglykoldiethylether, Diethylenglykoldimethylether, Cyclohexanon, Methylethylketon, Aceton, Isophoron oder Mischungen davon genannt.

Bei der Herstellung des erfindungsgemäß als Bindemittelkomponente II verwendeten, in Wasser dispergierbaren, epoxidmodifizierten Polyesters sind die Komponenten $(a_1)$, $(a_2)$, $(a_3)$ und $(a_4)$ in Art und Menge so auszuwählen, daß mindestens 10 Mol-%, bevorzugt 30 bis 70 Mol-%, der eingesetzten Komponenten $(a_1)$, $(a_2)$, $(a_3)$ und $(a_4)$ (bezogen auf $(a_1)$ + $(a_2)$ + $(a_3)$ + $(a_4)$ = 100 Mol-%) mindestens ein mindestens sechs C-Atome aufweisendes (cyclo-)aliphatisches Strukturelement enthalten und daß nach allgemein bekannten Syntheseprinzipien aus den Komponenten $(a_1)$ und/oder $(a_2)$, $(a_3)$ und $(a_4)$ ein Polyester synthetisiert werden kann, der ein mittleres Molekulargewicht (Zahlenmittel) von unter 2000, bevorzugt 500 bis 1500, eine Säurezahl von 35 bis 240, bevorzugt 50 bis 120, eine OH-Zahl von 56 bis 320, vorzugsweise 80 bis 200, aufweist und in dem alle $(a_1)$- und $(a_3)$-Komponenten über mindestens zwei Carboxylgruppen einkondensiert sind.

Die Carboxylgruppen des Polyesters werden von den Komponenten $(a_1)$ und/oder $(a_2)$ geliefert. Der Polyester kann unter alleiniger Verwendung der Carboxylgruppenlieferanten $(a_1)$ bzw. $(a_2)$ oder unter Verwendung eines Gemisches aus den Komponenten $(a_1)$ und $(a_2)$ aufgebaut werden.

Als Komponente $(a_1)$ kann unter Berücksichtigung der obengenannten Forderungen im Prinzip jede zur Herstellung von Polyestern geeignete, mindestens drei Carboxylgruppen enthaltende Polycarbonsäure bzw. ein reaktives Derivat (z.B. Anhydrid, Ester oder Halogenid) oder ein Gemisch solcher Säuren bzw. Säurederivate eingesetzt werden. Als Beispiele seien Trimellithsäure, Trimesinsäure (1,3,5-Benzoltricarbonsäure), Pyromellithsäure und trimere Fettsäuren genannt. Bevorzugt wird Trimellithsäure eingesetzt.

Als Komponente $(a_2)$ kann unter Berücksichtigung der obengenannten Forderungen im Prinzip jedes zur Herstellung von Polyestern geeignete carboxylgruppenhaltige Polyol bzw. ein Gemisch solcher Polyole eingesetzt werden, wobei unter einem Polyol eine organische Verbindung verstanden wird, die mindestens zwei Hydroxylgruppen trägt. Vorteilhafterweise wird Dimethylolpropionsäure als $(a_2)$-Komponente eingesetzt.

Als Komponente $(a_3)$ kann unter Berücksichtigung der obengenannten Forderung im Prinzip jede zur Herstellung von Polyestern geeignete zwei Carboxylgruppen enthaltende Polycarbonsäure bzw. reaktives Derivat (z.B. Anhydrid, Ester oder Halogenid) oder ein Gemisch solcher Säuren bzw. Säurederivate eingesetzt werden. Als Beispiele für geeignete Säuren seien genannt: Phthalsäure, Isophthalsäure, Terephthalsäure, Fumarsäure, Maleinsäure, Endomethylentetrahydrophthalsäure, Bernsteinsäure, Adipinsäure, Korksäure, Acelainsäure, Sebacinsäure und dimere Fettsäuren. Bevorzugt werden Phthalsäure, Isophthalsäure, Adipinsäure und dimere Fettsäuren eingesetzt.

Als Komponente $(a_4)$ kann unter Berücksichtigung der obengenannten Forderungen im Prinzip jedes zur Herstellung von Polyestern geeignete Polyol bzw. ein Gemisch von Polyolen eingesetzt werden, wobei unter Polyol eine organische Verbindung verstanden wird, die mindestens 2 Hydroxylgruppen trägt. Geeignete Polyole sind z.B. Ethylenglykol, Propandiole, Butandiole, Pentandiole, Neopentylglykol, Hexandiole, Diethylenglykol, Glycerin, Trimethylolethan, Trimethylolpropan, Pentaerythrit, Dipentaerythrit, Hydroxypivalinsäureneopentylglykolester, 2-Methyl-2-propyl-propandiol-1,3, 2,2,4-Trimethylpentandiol-1,3 und 2,2,5-Trimethylhexandiol-1,6. Bevorzugt werden Neopentylglykol, Hexandiol-1,6 und Hydroxypivalinsäureneopentylglykolester eingesetzt.

Der aus den Komponenten ($a_1$) und/oder ($a_2$), ($a_3$) und ($a_4$) hergestellte Polyester mit den obengenannten Kenndaten wird mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500 aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem erfindungsgemäßen epoxidharzmodifizierten Polyester umgesetzt, der nach Neutralisation von mindestens einem Teil der freien Carboxylgruppen in wasserverdünnbarer Form vorliegt.

Bei den Epoxidharzen auf Basis eines Bisphenols, vorzugsweise Bisphenol A, handelt es sich in der Regel um Umsetzungsprodukte von Bisphenolen mit Epichlorhydrin. Diese Epoxidharze sollen ein Epoxidäquivalentgewicht von 170 bis 1000, bevorzugt 170 bis 500, aufweisen und vorzugsweise im Durchschnitt eine bis zwei, besonders bevorzugt zwei Epoxidgruppen pro Molekül enthalten.

Es können auch mindestens eine Epoxidgruppe pro Molekül enthaltende Derivate dieser Epoxidharze eingesetzt werden. Als geeignete Derivate können mindestens eine Epoxidgruppe pro Molekül aufweisende Umsetzungsprodukte aus den obengenannten Epoxidharzen und einer (cyclo-)aliphatischen Mono- oder Polycarbonsäure, vorzugsweise einer Mono- oder Polycarbonsäure mit einem mindestens 6 C-Atome aufweisenden (cyclo-)aliphatischen Strukturelement, verwendet werden. Die Derivate können hergestellt werden, indem die in Rede stehenden Epoxidharze beispielsweise mit polymeren, vorzugsweise dimeren Fettsäuren, Adipinsäure, Azelainsäure, Dodekandicarbonsäure, langkettigen Monocarbonsäuren, Tetrahydrophthalsäure oder Hexahydrophthalsäure so umgesetzt werden, daß Umsetzungsprodukte entstehen, die noch mindestens eine Epoxidgruppe pro Molekül enthalten.

Ganz besonders bevorzugte wasserverdünnbare Überzugszusammensetzungen werden erhalten, wenn der in Stufe (A) synthetisierte Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-) aliphatischen Mono- oder Polycarbonsäure mit einem mindestens 18 C-Atome aufweisenden (cyclo-) aliphatischen Strukturelement, vorzugsweise einer polymeren, insbesondere einer dimeren Fettsäure, umgesetzt worden ist.

Die Umsetzung zwischen dem in der Stufe (A) synthetisierten Polyester mit dem Epoxidharz bzw. Epoxidharzderivat muß so geführt werden, daß im wesentlichen nur die Carboxylgruppen des Polyesters mit den Epoxidgruppen des Epoxidharzes umgesetzt werden und daß Konkurrenzreaktionen, wie z.B. die Umsetzung von Hydroxylgruppen mit Epoxidgruppen nur in untergeordnetem Maße ablaufen.

Geeignete Reaktionsbedingungen sind z.B.: Reaktionstemperatur 25 - 180 °C, vorzugsweise 80 - 160°C. Die Umsetzung kann in einem inerten Lösungsmittel oder in Substanz durchgeführt werden und wird vorteilhafterweise durch basische Katalysatoren, wie z.B. tertiäre Amine, katalysiert.

Nach Neutralisation von mindestens einem Teil der in dem erfindungsgemäßen epoxidharzmodifizierten Polyester enthaltenen Carboxylgruppen mit basischen Verbindungen, wie z.B. Ammoniak, aliphatischen sekundären und tertiären Aminen, wie Diisopropanolamin, Dimethyl- und Diethylaminoethanol sowie Trimethyl-, Triethyl- und Tripropylamin, vorzugsweise tertiären Aminen, liegt der erfindungsgemäße epoxidharzmodifizierte Polyester in wasserverdünnbarer Form vor.

Die Menge der in dem Bindemittel der erfindungsgemäßen wasserverdünnbaren Einbrennlacke enthaltenden Komponente (II) liegt zwischen 20 und 70 Gew.-%, bevorzugt zwischen 25 und 50 Gew.-%.

Außerdem enthalten die erfindungsgemäßen Einbrennlacke 0 bis 20 Gew.-% eines wasserverdünnbaren Aminoplastharzes. Bevorzugt werden wasserverdünnbare Melamin- und/oder Benzoguanaminharze eingesetzt.

Wasserlösliche Melaminharze sind an sich bekannt und werden in größerem Umfang eingesetzt. Es handelt sich hierbei um veretherte Melamin-formaldehyd-Kondensationsprodukte. Ihre Wasserlöslichkeit hängt - abgesehen vom Kondensationsgrad, der möglichst niedrig sein soll, - von der Veretherungskomponente ab, wobei nur die niedrigsten Glieder der Alkanol- bzw. Ethylenglykolmonoetherreihe wasserlösliche Kondensate ergeben. Die größe Bedeutung haben die Hexamethoxymethylmelaminharze. Bei Verwendung von Lösungsvermittlern können auch butanolveretherte Melaminharze in wäßriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können als zusätzliche Bindemittelkomponente eingesetzt werden.

EP 0 339 433 B1

Anstelle oder zusammen mit den beschriebenen Melaminharzen können auch andere wasserlösliche oder wasserdispergierbare Aminoharze, wie z.B. Benzoguanaminharze eingesetzt werden.

Die unter Verwendung der obengenannten Bindemitteldispersion hergestellten, als Füllermaterialien und Steinschlagzwischengrund geeigneten Einbrennlacke können außerdem alle zur Herstellung von Automobilfüllern bzw. Steinschlagzwischengründen gebräuchlichen Pigmente, Füllstoffe, Weichmacher, Stabilisatoren, Netzmittel, Dispergierhilfsmittel, Verlaufsmittel, Entschäumer und Katalysatoren enthalten. Diese Einbrennlacke weisen in gebrauchsfertigem Zustand eine Viskosität von 20 bis 30 s, gemessen im Auslaufbecher nach DIN 4, einen Wassergehalt von 45 bis 55 Gew.-% und einen Gehalt an organischen Lösungsmitteln von 4 bis 10 Gew.-% auf. Alle Gewichtsprozent-Angaben sind auf die gesamte Beschichtungszusammensetzung ( = 100 Gew.-%) bezogen. Die mit Hilfe der erfindungsgemäßen Einbrennlacke hergestellten Füllermaterialien können mit Hilfe von elektrostatischen bzw. elektrostatisch unterstützten Spritzverfahren problemlos aufgetragen und ohne Bläschenbildung eingebrannt werden und liefern Beschichtungen, die auf unterschiedlichen Grundierungen gut haften und auf denen auch unterschiedliche Decklackschichten gut haften. Ein weiterer wichtiger Vorteil sind die guten Verlaufseigenschaften des Füllermaterials sowie insbesondere die verbesserte Steinschlagbeständigkeit der resultierenden Beschichtung.

Die Erfindung betrifft auch Verfahren zur Lackierung von Automobilkarosserien, bei denen

(1) ein Elektrotauchlack appliziert und eingebrannt wird,

(2) ein Füllermaterial appliziert und eingebrannt wird und

(3) eine ein- oder mehrschichtige Decklackierung appliziert und eingebrannt wird,

und das dadurch gekennzeichnet ist, daß als Füllermaterial ein wasserverdünnbarer Einbrennlack eingesetzt wird, der als Bindemittel eine Kombination aus

(I) 20 bis 70 Gew.-%, bevorzugt 40 bis 60 Gew.-%, eines Polyurethanharzes, das eine Säurezahl von 15 bis 35, bevorzugt 20 - 30, aufweist und herstellbar ist, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 20 bis 70 Gew.-%, bevorzugt 25 bis 50 Gew.-%, eines epoxidharzmodifizierten, wasserverdünnbaren Polyesters, der herstellbar-ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35 bis 240, bevorzugt 50 - 120, eine OH-Zahl von 56-320, vorzugsweise 80-200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt, und

(III) 0 bis 20 Gew.-% eines wasserverdünnbaren Aminoplastharzes

enthält, wobei die Summe der Komponenten (I) bis (III) 100 Gew.-% ergibt.

Für die Herstellung des in dem erfindungsgemäßen Verfahren eingesetzten wasserverdünnbaren Einbrennlacks geeignete Verbindungen sind die bereits bei der Beschreibung der wasserverdünnbaren Einbrennlacke aufgeführten Verbindungen.

Als Grundierung wird vorzugsweise ein gebräuchlicher kathodisch abscheidbarer Elektrotauchlack aufgebracht und eingebrannt. Als Decklackierung können alle gebräuchlichen Decklacke eingesetzt werden, wobei Zweischichtlackierungen, insbesondere Zweischichtmetalleffektlackierungen auf Basis eines wasserverdünnbaren Basislackes, bevorzugt sind.

Weiterhin betrifft die Erfindung Verfahren zur Lackierung von Automobilkarosserien, bei denen

(1) ein Elektrotauchlack appliziert und eingebrannt wird,

(2) ein Steinschlagzwischengrund appliziert und getrocknet wird

(3) ein Füllermaterial appliziert und eingebrannt wird und

(4) eine ein- oder mehrschichtige Decklackierung appliziert und eingebrannt wird,

dadurch gekennzeichnet, daß als Steinschlagzwischengrund ein wasserverdünnbarer Einbrennlack eingesetzt wird, der als Bindemittel eine Kombination aus

(I) 40 bis 80 Gew.-%, bevorzugt 50 bis 70 Gew.-%, eines Polyurethanharzes, das eine Säurezahl von 15 bis 35, bevorzugt 20 bis 30, aufweist und herstellbar ist, indem aus

    a) 4,0 bis 1,9 mol Polyether- und/oder Polyesterdiolen mit einem zahlenmittleren Molekulargewicht von 400 bis 3000,

    b) 5,6 bis 11,2 mol Diisocyanaten und

    c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 10 bis 40 Gew.-%, bevorzugt 10 bis 25 Gew.-%, eines epoxidharzmodifizierten, wasserverdünnbaren Polyesters, der herstellbar ist, indem

    (A) aus

        ($a_1$) mindestens einer mindestens drei Carboxylgruppen enthaltenden Polycarbonsäure bzw. einem reaktiven Derivat dieser Säure und/oder

        ($a_2$) mindestens einem mindestens eine Carboxylgruppe aufweisenden Polyol und

        ($a_3$) mindestens einer zwei Carboxylgruppen enthaltenden Polycarbonsäure bzw. einem reaktiven Derivat dieser Säure und

        ($a_4$) mindestens einem Polyol,

        - wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

    ein Polyester synthetisiert worden ist, der ein mittleres Molekulargewicht (Zahlenmittel) von unter 2000, bevorzugt 500 bis 1500, eine Säurezahl von 35 - 240, bevorzugt 50 - 120, eine OH-Zahl von 56 - 320, vorzugsweise 80-200, aufweist und in dem alle ($a_1$)- und ($a_3$)-Komponenten über mindestens zwei Carboxylgruppen einkondensiert sind und

    (B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt,

(III) 0 bis 15 Gew.-% eines wasserverdünnbaren Aminoplastharzes und

(IV) 0 bis 10 Gew.-% eines wasserverdünnbaren Polyesterharzes

enthält, wobei die Summe der Komponenten (I) bis (IV) jeweils 100 Gew.-% beträgt.

Die Komponenten (I) bis (III) des wäßrigen Einbrennlackes wurden bereits oben beschrieben. Die als Komponente (IV) in einer Menge von 0 bis 10 Gew.-% eingesetzten wasserverdünnbaren Polyester sind solche mit freien Carboxylgruppen, d.h. Polyester mit hoher Säurezahl. Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen.

8

Nach Neutralisation mit Basen sind die so erhaltenen Polyester in Wasser löslich und verfilmen beim Einbrennen. Die zweite Möglichkeit besteht in der Bildung partieller Ester von Di- oder Polycarbonsäuren mit hydroxylreichen Polyestern mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

In dem Verfahren einsetzbare Elektrotauchlacke und Decklacke sind ebenfalls bereits oben beschrieben.

Als Füllermaterialien können die erfindungsgemäßen Füller, aber auch die aus dem Stand der Technik bekannten (Wasserfüller auf Alkydharzbasis (z.B. gemäß der DE-OS 35 37 855), die Wasserfüller gemäß der Patentanmeldung DE 36 36 368 und auch Füller auf Lösungsmittelbasis eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

Herstellung einer Polyurethandispersion I

1056 g eines hydroxiterminierten-Polyesters aus 1 mol Neopentylglykol, 2 mol Hexandiol-1,6 und 2 mol Adipinsäure werden zusammen mit 185 g Dimethylolpropionsäure 2 h bei 100ºC im Vakuum entwässert. Dann werden nach Abkühlung auf 60ºC 1100 g Methylethylketon, 1114 g 4,4′ -Diisocyanato-dicyclohexylmethan und 3 g Dibutylzinnlaurat unter Rühren zugegeben. Durch Kühlen wird die Reaktionstemperatur auf 80ºC gehalten.

Bei einem NCO-Gehalt,bezogen auf das Gesamtprodukt, von 2,1 % werden 74,5 g Trimethylolpropan, weitere 523,7 g Methylethylketon sowie weitere 3 g Dibutylzinnlaurat bei 80ºC zugegeben. Nachdem eine Viskosität von 200 - 250 s (gemessen im 6 mm Becher, Probe verdünnt 1 : 1 mit N-Methylpyrrolidon)-erreicht ist, wird abgekühlt und unter dem Schnellrührer mit 42,5 g Dimethylethanolamin in 1427 g Wasser dispergiert. Dann wird das Methylethylketon unter Vakuum bei maximal 65ºC abdestilliert. Nachdem der überwiegende Teil des Methylethylketons abdestilliert ist, werden weitere 1800 g Wasser zugegeben und das restliche Methylethylketon abdestilliert. Die resultierende feinteilige, niedrigviskose Dispersion weist einen nichtflüchtigen Anteil von 39 % und einen pH-Wert von 7,2 auf.

Herstellung einer Polyurethandispersion II

11,420 g 4,4′-Diisocyanato-dicyclohexylmethan werden auf 50ºC aufgeheizt. Innerhalb 60 min werden 19,110 g eines Polyesters aus 2 mol Adipinsäure, 2 mol Hexandiol und 1 mol Neopentylglykol (Säurezahl 1-3 mg KOH/g, 68 %ig in N-Methylpyrrolidon) so zugegeben, wie es die auftretende exotherme Reaktion zuläßt. Die Temperatur läßt man auf 90ºC steigen und hält sie 30 min. Nun kühlt man auf 60ºC ab und gibt 8,400 g Aceton, 1,640 g Dimethylolpropionsäure sowie 0,850 g Triethylamin unter Rühren zu.

Nun hält man die Temperatur bei 60ºC bis ein NCO-Gehalt von 1,46 %, bezogen auf die Einwaage, erreicht ist. Dann werden 0,640 g Trimethylolpropan, 2,760 g Aceton und 0,010 g Dibutylzinndilaurat zugegeben. Die Temperatur wird bei 60ºC (Rückfluß) gehalten, bis eine Viskosität, gemessen im DIN-4-Becher, von 140 - 160 s erreicht ist. Dann werden 51,000 g deionisiertes Wasser zudosiert und das Aceton im Vakuum vollständig abdestilliert.

Mit 4,170 g deionisiertem Wasser wird auf einen Festkörper von 30 % eingestellt.

Man erhält eine feinteilige Dispersion mit einer Viskosität von 20 - 50" Auslaufzeit im DIN-4-Becher und und einem pH-Wert von 7,7 - 7,9.

Herstellung einer Polyesterdispersion I

In einem mittels Wärmeträgeröl beheizbaren Edelstahlreaktionskessel, der mit einem Ankerrührer, Rückflußkühler, Schutzgaszuleitung ($N_2$) und Temperaturfühler für die Reaktionsguttemperatur versehen ist, werden 922,5 g eines Epoxidharzes aus Bisphenol A und Epichlorhydrin mit einem Epoxidäquivalentgewicht von 185 und 2,5 g N,N-Dimethylbenzylamin eingewogen und unter Rühren auf 100ºC erhitzt. Dann werden bei 100ºC portionsweise 600,0 g einer technischen polymeren Fettsäure (Dimerengehalt mindestens 80 Gew.-%, Trimerengehalt höchstens 20 Gew.-%, Monomerenanteil höchstens 1 Gew.-%) zugesetzt und auf 140ºC aufgeheizt. Es wird so lange umgesetzt, bis eine Säurezahl von 1,5 und ein Epoxidäquivalentgewicht von 535 erreicht worden ist. Anschließend wird mit 380 g Diethylenglykolmonobutylether verdünnt. (Eine 50 Gew.-%ige Lösung des Produktes in Diethylenglykolmonobutylether zeigt eine Lösungsviskosität von 120 mPa.s (23ºC, ICI Platte-Kegel-Viskosimeter).

442,4 g Hexandiol-1,6 und 166,6 g einer technischen polymeren Fettsäure (Dimerengehalt mindestens 80 Gew.-%, Trimerengehalt höchstens 20 Gew.-%, Monomerenanteil höchstens 1 Gew.-%) werden in einem mittels Wärmeträgeröl beheizbaren Edelstahlreaktionskessel, der mit einem Ankerrührer, Füllkörperkolonne, Brüdenkondensator mit Vorlage, Schutzgaszuleitung (N$_2$) und Temperaturfühlern für die Reaktionsguttemperatur und die Brüdentemperatur am Kolonnenkopf versehen ist, eingewogen und auf 130°C aufgeheizt. Dann werden 184,3 g Isophthalsäure zugegeben und weiter aufgeheizt. Sobald sich Kondensationswasser bildet (ab etwa 160°C), wird die Reaktionsguttemperatur so langsam unter Abdestillieren des Kondensationswassers bis auf höchstens 220°C gesteigert, daß die Brüdentemperatur am Kolonnenkopf 103°C nicht übersteigt. Es wird bei 220°C so lange kondensiert, bis das Reaktionsgut eine Säurezahl von 10,5 erreicht hat. Nach Abkühlen auf 140°C werden portionsweise 266,7 g Trimellithsäureanhydrid in das Reaktionsgut unter Rühren eingetragen. Danach wird auf 150°C aufgeheizt und so lange verestert, bis das Reaktionsgut eine Säurezahl von 67,7 erreicht hat. Dann wird auf 120°C und mit Ethylenglykolmonobutylether so verdünnt, daß eine Lösung mit 90 Gew.-% Feststoffgehalt erhalten wird.

1110 g dieser Polyesterharzlösung werden mit 270 g der nach dem oben beschriebenen Verfahren hergestellten Epoxidharzlösung versetzt. Das Gemisch wird auf 140°C erwärmt und bei 140°C so lange umgesetzt, bis das Produkt eine Säurezahl von 40,9 (bezogen auf Festkörper) und ein Epoxidäquivalentgewicht von mehr als 50.000 aufweist. Dann wird das Reaktionsgut auf 100°C abgekühlt, mit 63,0 g N,N-Dimethylethanolamin neutralisiert.

Das Reaktionsgut wird dann unter Rühren in 2.000 g deionisiertes Wasser, das auf 60°C erwärmt wurde, abgelassen, und durch intensives Rühren wird eine stabile Bindemitteldispersion erzeugt, die mit 180 g deionisiertem Wasser und N,N-Dimethylethanolamin auf einen Festkörper von 35 Gew.-% (bestimmt nach 60-minütiger Trocknung bei 130°C in einem Umlufttrockenschrank) und einen pH-Wert bei 23°C von 6,60 eingestellt.

Herstellung einer Polyesterdispersion II

278,9 g Neopentylglykol, 113,7 g Tetrahydrophthalsäureanhydrid und 101,2 g Isophthalsäure werden in einem mittels Wärmeträgeröl beheizbaren Edelstahlreaktionskessel, der mit einem Ankerrührer, Füllkörperkolonne, Brüdenkondensator mit Vorlage, Schutzgaszuleitung (N$_2$) und Temperaturfühlern für die Reaktionsguttemperatur und die Brüdentemperatur am Kolonnenkopf versehen ist, eingewogen und aufgeheizt. Sobald sich Kondensationswasser bildet (ab etwa 160°C), wird die Reaktionsguttemperatur so langsam unter Abdestillieren des Kondensationswassers weiter bis auf höchstens 220°C gesteigert, daß die Brüdentemperatur am Kolonnenkopf 105°C nicht übersteigt.

Es wird bei 220°C so lange kondensiert, bis das Reaktionsgut eine Säurezahl von 17-19 mg KOH/g aufweist und die Viskosität der in Butylglykol angelösten Probe (60 % Festkörper) bei 23°C 1,0 bis 1,2 dPas beträgt. Nach Abkühlen auf 150°C werden portionsweise 127,8 g Trimellithsäureanhydrid in das Reaktionsgut unter Rühren eingetragen. Danach wird auf 160°C aufgeheizt und so lange verestert, bis das Reaktionsgut eine Säurezahl von 55 - 59 mg KOH/g erreicht hat und die Viskosität der in Butylglykol angelösten Probe (60 % Festkörper) bei 23°C 16,0 - 18,0 dPas beträgt. Dann wird schnell auf 120°C abgekühlt und das Reaktionsgut mit 103,9 g Butylglykol im Reaktor angelöst. Dann werden 30,0 g Dimethylethanolamin und 210 g entionisiertes Wasser unter Rühren zugegeben und das Reaktionsgut vollständig gelöst. Mit 9,2 g Dimethylethanolamin und 25,3 g entionisiertem Wasser wird ein pH-Wert von 6,3 - 6,5 und ein Festkörper von 60 % (60 min bei 130°C) eingestellt.

Beispiel 1: Herstellung eines Füllers I

18 Gew.-% der Polyesterdispersion I werden mit 0,2 Gew.-% einer 50 %igen Lösung eines handelsüblichen Netzmittels auf Basis Tertiär-Acetylen-Glykol, gelöst in Ethylenglykol, und 4,3 Gew.-% entionisiertem Wasser sowie 0,1 Gew.-% N,N-Dimethylethanolamin versetzt und mit 11,0 Gew.-% nachbehandeltem Titandioxid vom Rutiltyp, 11,0 Gew.-% handelsüblichem, feinteiligem Bariumsulfat, 1,3 Gew.-% oberflächenbehandeltem Talkum und 0,1 Gew.-% eines handelsüblichen Flammrußes angepastet. Diese Mischung wird in eine diskontinuierliche Laborsandmühle gefüllt und dispergiert, bis eine Feinheit von max. 12 $\mu$m, gemessen im Grindometer nach Hegmann, erreicht wird. Aus der Dispergiermischung wird dann unter Zusatz von weiteren 6,0 Gew.-% der Polyesterdispersion I, 40 Gew.-% der Polyurethandispersion I, 4,0 Gew.-% niedrigmolekularem, mit Methanol hochverethertem Melaminharz und 4,0 Gew.-% entionisiertem Wasser nach allgemein bekannten Methoden der Füller I erhalten. Der pH-Wert dieses Füllers wird mit N,N-Dimethylethanolamin auf 7,8 bis 8,0 eingestellt. Die Viskosität des Füllers beträgt 120 s, gemessen im Auslaufbecher nach DIN 4 bei 20°C. Der Füller wird nun mit entionisiertem Wasser auf eine Viskosität von 25 s, gemessen im Auslaufbecher nach DIN 4 bei 20°C, eingestellt und mit einer Fließbecherpistole (Düsenöffnung 1,2 mm; Luftdruck 4,5 bar) in zwei Kreuzgängen mit einer Minute Zwischenablüftzeit auf mit einem Elektrotauchlack gemäß Beispiel 6 der DE-PS 27 01 002 beschichtete phosphatierte Stahlbleche aufgespritzt. Die Applikation erfolgte bei einer Lufttemperatur von 23°C und einer relativen Luftfeuchte von 60 %.

Außerdem wird der Füller auch elektrostatisch appliziert. Dabei wurde mit einer Esta-Behr-Anlage mit einer Glocke TOS 300/5/8, einem Abstand von 30 cm und einer Drehzahl von 30.000 Umdrehungen pro Minute bei einer relativen Luftfreuchte von 40 - 70 % gearbeitet.

Die beschichteten Stahlbleche werden 10 min bei 23°C und 10 min bei 80°C in einem Umluftofen abgelüftet und dann 20 min bei 160°C in einem Umluftofen eingebrannt und abgekühlt.

Danach werden alle Stahlbleche zusätzlich mit einem lösungsmittelhaltigen weißen Einbrennlack auf Basis eines Alkydharzes mit gesättigten und ungesättigten Fettsäuren (Säurezahl 12, OH-Zahl 110) in Kombination mit einem mittelmolekularen, teilweise mit n-Butanol veretherten Melaminharz (Verhältnis 2 : 1), pigmentiert mit einem nachbehandelten Titandioxid vom Rutiltyp (PVK 21 %) und mit Lösungsmitteln und Additiven, die üblicherweise für die Verarbeitung eines Lackes für die Automobilserienlackierung eingesetzt werden, überspritzt und 30 min bei 130°C eingebrannt (Trockenfilmdicke 37 bis 40 $\mu$m).

Die Überzüge zeichnen sich insbesondere durch sehr gute Steinschlagbeständigkeit sowie guten Verlauf, gute Abdeckung der Struktur der Grundierung und gute Zwischenhaftung (vgl. Tabelle 1) aus.

Vergleichsbeispiel

Herstellung eines Füllers II

18 Gew.-% der Polyesterdispersion I werden mit 0,2 Gew.-% einer 50 %igen Lösung eines handelsüblichen Netzmittels auf Basis Tertiär-Acetylen-Glykol, gelöst in Ethylenglykol, und 4,3 Gew.-% entionisiertem Wasser sowie 0,1 Gew.-% N,N-Dimethylethanolamin versetzt und mit 11,0 Gew.-% nachbehandeltem Titandioxid vom Rutiltyp, 11,0 Gew.-% handelsüblichem, feinteiligem Bariumsulfat, 1,3 Gew.-% oberflächenbehandeltem Talkum und 0,15 Gew.-% eines handelsüblichen Flammrußes angepastet. Diese Mischung wird in eine diskontinuierliche Laborsandmühle gefüllt und dispergiert, bis eine Feinheit von max. 12 $\mu$m, gemessen im Grindometer nach Hegman, erreicht wird. Aus der Dispergiermischung wird dann unter Zusatz von weiteren 17,8 Gew.-% Polyesterdispersion I, 2,5 Gew.-% Butylglykol, 0,7 Gew.-% wasserverdünnbarem Acrylatharz als Verlaufsmittel, 10,0 Gew.-% der Polyesterdispersion II, 2,4 Gew.-% niedrigmolekularem, mit Methanol/Ethanol hochverethertem Benzoguanaminharz, 1,0 Gew.-% niedrigmolekularem, mit Methanol/n-Butanol hochverethertem Melaminharz, 1,0 Gew.-% einer 10 %igen Lösung eines Aminosalzes der p-Toluolsulfonsäure, gelöst in Butylglykol, 16,55 Gew.-% entionisiertem Wasser, 1,8 Gew.-% eines handelsüblichen Benzins und 0,2 Gew.-% N,N-Dimethylethanolamin nach allgemein bekannten Methoden der Füller II erhalten. Der pH-Wert des Füllers wird mit N,N-Dimethylethanolamin auf 7,8 eingestellt. Die Viskosität des Füllers beträgt 110 s, gemessen im Auslaufbecher nach DIN 4 bei 20°C.

Dieser Füller II wird - wie im Beispiel 1 beschrieben - auf elektrotauchlackierte Stahlbeche appliziert und eingebrannt. Nach dem Abkühlen werden die Stahlbleche analog zu Beispiel 1 mit einem Einbrenndecklack überspritzt und eingebrannt.

Die Ergebnisse der verschiedenen Prüfungen der Beschichtungen sind in Tabelle 1 zusammengefaßt.

Beispiel 2:

Herstellung eines Steinschlagzwischengrundes

3,5 Gew.-% einer handelsüblichen 75 %igen Lösung eines wasserverdünnbaren, modifizierten Epoxidharzesters in Butylglykol und 11,5 Gew.-% der Polyesterdispersion I werden mit 0,2 Gew.-% einer 50 %igen Lösung eines handelsüblichen Netzmittels auf Basis Tertiär-Acetylen-Glykol, gelöst in Ethylenglykol, 0,1 Gew.-% N,N-Dimethylethanolamin und 7,6 Gew.-% entionisiertem Wasser versetzt und mit 5,7 Gew.-% handelsüblichem, feinteiligem Bariumsulfat, 7,6 Gew.-% nachbehandeltem Titandioxid vom Rutiltyp, 0,7 Gew.-% oberflächenbehandeltem Talkum und 0,2 Gew.-% eines handelsüblichen Flammrußes angepastet. Die Mischung wird in eine diskontinuierliche Laborsandmühle gefüllt und dispergiert, bis eine Feinheit von max. 12 $\mu$m, gemessen im Grindometer nach Hegman, erreicht wird. Aus der Dispergiermischung wird dann unter Zusatz von 57,6 Gew.-% der Polyurethandispersion II, 2,9 Gew.-% niedrigmolekularem, mit Methanol hochverethertem Melaminharz und 2,4 Gew.-% einer 1 : 10 Lösung von Dimethyletanolamin in Wasser nach allgemein bekannten Methoden der Steinschlagzwischengrund erhalten. Der pH-Wert dieses Steinschlagzwischengrundes wird mit N,N-Dimethylethanolamin auf 8,0 eingestellt. Die Viskosität des Steinschlagzwischengrundes beträgt 110 s, gemessen im Auslaufbecher nach DIN 4 bei 20°C.

Der Steinschlagzwischengrund wird nun mit entionisiertem Wasser auf eine Viskosität von 18 s, gemessen im Auslaufbecher nach DIN 4 bei 20°C, eingestellt und - wie in Beispiel 1 für den Füller beschrieben - auf elektrotauchlackierte Stahlbleche appliziert und 5 min bei 110°C mit IR-Strahlung getrocknet. Danach erfolgt die Applikation des Füllers II, das Einbrennen des Füllers und die Decklackierung der Stahlbleche analog zu Beispiel 1.

Die Ergebnisse der verschiedenen Prüfungen der Beschichtungen sind in Tabelle 1 zusammengefaßt.

Tabelle 1: Prüfergebnisse

| | Füller I | Füller II | Steinschlagzwischengrund plus Füller II |
|---|---|---|---|
| Schichtdicke ($\mu$m) | 35 | 35 | 15 Steinschlagzwischengrund 25 Füller II |
| Gitterschnitt nach DIN 53151 (Gt B) | 1 | 1 | 1 |
| Erichsentiefung (mm) | 5,8 | 5,8 | 5,8 |
| Steinschlagtest * | 1 - 2 | 3 | 1 - 2 |

* Der Steinschlagtest wurde mit einem VDA-Steinschlagprüfgerät
  (Modell 508) durchgeführt (innerhalb von 20 s Beschuß mit zweimal
  500 g Stahlschrot; Druck 2 bar). Die Bewertungsskala reicht von 1 (sehr gut)
  bis 10 (sehr schlecht).

EP 0 339 433 B1

**Patentansprüche**

**Patentansprüche für folgende Vertragsstaaten : AT, BE, CH, DE, FR, GB, IT, LI, NL, SE**

1. Wasserverdünnbare Einbrennlacke auf der Basis einer Polyurethan-, Polyester- und ggf. Aminoplastharz-Mischung als Bindemittel, dadurch gekennzeichnet, daß die Einbrennlacke als Bindemittel eine Kombination aus

   (I) 20 bis 70 Gew.-%, bevorzugt 40 bis 60 Gew.-%, eines Polyurethanharzes, das eine Säurezahl von 15 bis 35, bevorzugt 20 bis 30, aufweist und herstellbar ist, indem aus

   a) 4,0 bis 1,9 mol Polyether- und/oder Polyesterdiolen mit einem zahlenmittleren Molekulargewicht von 400 bis 3000,

   b) 5,6 bis 11,2 mol Diisocyanaten und

   c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

   ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

   (II) 20 bis 70 Gew.-%, bevorzugt 25 bis 50 Gew.-%, eines epoxidharzmodifizierten, wasserverdünnbaren Polyesters, der herstellbar ist, indem

   (A) aus

   ($a_1$) mindestens einer mindestens drei Carboxylgruppen enthaltenden Polycarbonsäure bzw. einem reaktiven Derivat dieser Säure und/oder

   ($a_2$) mindestens einem mindestens eine Carboxylgruppe aufweisenden Polyol und

   ($a_3$) mindestens einer zwei Carboxylgruppen enthaltenden Polycarbonsäure bzw. einem reaktiven Derivat dieser Säure und

   ($a_4$) mindestens einem Polyol,

   - wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)- aliphatisches Strukturelement enthalten -

   ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-320, vorzugsweise 80-200, aufweist und in dem alle ($a_1$)- und ($a_3$)-Komponenten über mindestens zwei Carboxylgruppen einkondensiert sind und

   (B) dieser so gewonnene Polyester anschließend mit 0,3 bis 1,5, vorzugsweise 0,5 bis 1,0, Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt, und

   (III) 0 bis 20 Gew.-% eines wasserverdünnbaren Aminoplastharzes

   enthalten, wobei die Summe der Komponenten (I) bis (III) jeweils 100 Gew.-% beträgt.

2. Wasserverdünnbarer Einbrennlack, dadurch gekennzeichnet, daß er als Bindemittel eine Kombination aus

   (I) 40 bis 80 Gew.-%, bevorzugt 50 bis 70 Gew.-%, eines Polyurethanharzes, das eine Säurezahl von 15 bis 35, bevorzugt 20 bis 30, aufweist und herstellbar ist, indem aus

   a) 4,0 bis 1,9 mol Polyether- und/oder Polyesterdiolen mit einem zahlenmittleren Molekulargewicht von 400 bis 3000,

   b) 5,6 bis 11,2 mol Diisocyanaten und

   c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

   ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 10 bis 40 Gew.-%, bevorzugt 10 bis 25 Gew.-%, eines epoxidharzmodifizierten wasserverdünnbaren Polyesters, der herstellbar ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-230, vorzugsweise 80-200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5 vorzugsweise 0,5 bis 1,0, Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt,

(III) 0 bis 15 Gew.-% eines wasserverdünnbaren Aminoplastharzes und

(IV) 0 bis 10 Gew.-% eines wasserverdünnbaren Polyesterharzes

enthält, wobei die Summe der Komponenten (I) bis (IV) jeweils 100 Gew.-% beträgt.

3. Wasserverdünnbarer Einbrennlack nach Anspruch 1 oder 2, dadurch gekennzeichnet, daß ein Teil der Komponenten ($a_1$) und/oder ($a_3$) aus mindestens einer polymeren, vorzugsweise dimeren Fettsäure besteht.

4. Wasserverdünnbarer Einbrennlack nach einem der Ansprüche 1 bis 3, dadurch gekennzeichnet, daß der in Stufe (A) gewonnene Polyester mit 0,3 bis 1,5 vorzugsweise 0,5 bis 1,0, Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure, vorzugsweise einer Mono- oder Polycarbonsäure mit einem mindestens 6 C-Atome aufweisenden (cyclo-)aliphatischen Strukturelement, umgesetzt worden ist.

5. Wasserverdünnbarer Einbrennlack nach Anspruch 1 bis 4, dadurch gekennzeichnet, daß der in Stufe (A) gewonnene Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure mit einem mindestens 18 C-Atome aufweisenden (cyclo-)aliphatischen Strukturelement, vorzugsweise einer polymeren, insbesondere einer dimeren Fettsäure, umgesetzt worden ist.

6. Verfahren zur Lackierung von Automobilkarosserien, bei denen

(1) ein Elektrotauchlack appliziert und eingebrannt wird,

(2) ein Füllermaterial appliziert und eingebrannt wird und

(3) eine ein- oder mehrschichtige Decklackierung appliziert und eingebrannt wird,

dadurch gekennzeichnet, daß als Füllermaterial ein wasserverdünnbarer Einbrennlack eingesetzt wird, der

(I) 20 bis 70 Gew.-%, bevorzugt 40 bis 60 Gew.-%, eines Polyurethanharzes, das eine Säurezahl von 15 bis 35, bevorzugt 20 - 30, aufweist und herstellbar ist, indem aus

a) 4,0 bis 1,9 mol Polyether- und/oder Polyesterdiolen mit einem zanlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 20 bis 70 Gew.-%, bevorzugt 25 bis 50 Gew.-%, eines epoxidharzmodifizierten, wasserverdünnbaren Polyesters, der herstellbar ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-320, vorzugsweise 80-200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt, und

(III) 0 bis 20 Gew.-% eines wasserverdünnbaren Aminopastharzes

enthält, wobei die Summe der Komponenten (I) bis (III) jeweils 100 Gew.-% beträgt.


**7.** Verfahren zur Lackierung von Automobilkarosserien, bei denen

(1) ein Elektrotauchlack appliziert und eingebrannt wird

(2) ein Steinschlagzwischengrund appliziert und getrocknet wird

(3) ein Füller appliziert und eingebrannt wird und

(4) eine ein- oder mehrschichtige Decklackierung appliziert und eingebrannt wird,

dadurch gekennzeichnet, daß als Steinschlagzwischen grund ein wasserverdünnbarer Einbrennlack eingesetzt wird, der als Bindemittel eine Kombination aus

(I) 40 bis 80 Gew.-%, bevorzugt 50 bis 70 Gew.-%, eines Polyurethanharzes, das eine Säurezahl von 15 bis 35, bevorzugt 20 bis 30, aufweist und herstellbar ist, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 10 bis 40 Gew.-%, bevorzugt 10 bis 25 Gew.-%, eines epoxidharzmodifizierten wasserverdünnbaren Polyesters, der herstellbar ist, indem

(A) aus

(a$_1$) mindestens einer mindestens drei Carboxylgruppen enthaltenden Polycarbonsäure bzw. einem reaktiven Derivat dieser Säure und/oder

(a$_2$) mindestens einem mindestens eine Carboxylgruppe aufweisenden Polyol und

(a$_3$) mindestens einer zwei Carboxylgruppen enthaltenden Polycarbonsäure bzw. einem reaktiven Derivat dieser Säure und

(a$_4$) mindestens einem Polyol,

- wobei mindestens 10 Mol-%, bevorzugt 30-70 Mol-%, der eingesetzten Komponenten (a$_1$), (a$_2$), (a$_3$) und (a$_4$) (bezogen auf (a$_1$) + (a$_2$) + (a$_3$) + (a$_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-230, vorzugsweise 80-200, aufweist und in dem alle (a$_1$)- und (a$_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt,

(III) 0 bis 15 Gew.-% eines wasserverdünnbaren Aminoplastharzes und

(IV) 0 bis 10 Gew.-% eines wasserverdünnbaren Polyesterharzes

enthält, wobei die Summe der Komponenten (I) bis (IV) jeweils 100 Gew.-% beträgt.

8. Verfahren nach Anspruch 6 oder 7, dadurch gekennzeichnet, daß ein Teil der Komponenten (a$_1$) und/oder (a$_3$) aus mindestens einer polymeren, vorzugsweise dimeren Fettsäure besteht.

9. Verfahren nach Anspruch 6 bis 8, dadurch gekennzeichnet, daß der in Stufe (A) gewonnene Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure, vorzugsweise einer Mono- oder Polycarbonsäure mit einem mindestens 6 C-Atome aufweisenden (cyclo-)aliphatischen Strukturelement, umgesetzt worden ist.

10. Verfahren nach Anspruch 6 bis 9, dadurch gekennzeichnet, daß der in Stufe (A) gewonnene Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure mit einem mindestens 18 C-Atome aufweisenden (cyclo)-aliphatischen Strukturelement, vorzugsweise einer polymeren, insbesondere einer dimeren Fettsäure, umgesetzt worden ist.

11. Verwendung einer Kombination aus

(I) 20 bis 70 Gew.-%, bevorzugt 40 bis 60 Gew.-%, eines Polyurethanharzes, das eine Säurezahl von 15 bis 35, bevorzugt 20 - 30, aufweist und herstellbar ist, indem aus

a) 4,0 bis 1,9 mol Polyether und/oder Polyesterdiolen mit einem zahlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 20 bis 70 Gew.-%, bevorzugt 25 bis 50 Gew.-%, eines epoxidharzmodifizierten, wasserverdünnbaren Polyesters, der herstellbar ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-320, vorzugsweise 80-200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einen Teil der freien Carboxylgruppen in wasserverdünnbarer Form vorliegt , und

(III) 0 bis 20 Gew.-% eines wasserverdünnbaren Aminoplastharzes,

wobei die Summe der Komponenten (I) bis (III) jeweils 100 Gew.-% beträgt, als Bindemittel in wasserverdünnbaren Einbrennlacken, die bei der Lackierung von Automobilkarosserien zur Herstellung von Füllerschichten eingesetzt werden.

**12.** Verwendung einer Kombination aus

(I) 40 bis 80 Gew.-%, bevorzugt 50 bis 70 Gew.-%, eines Polyurethanharzes, das eine Säurezahl von 15 bis 35, bevorzugt 20 bis 30, aufweist und herstellbar ist, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,6 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 10 bis 40 Gew.-%, bevorzugt 10 bis 25 Gew.-%, eines epoxidharzmodifizierten wasserverdünnbaren Polyesters, der herstellbar ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo)-aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-230, vorzugsweise 80-200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt,

(III) 0 bis 15 Gew.-% eines wasserverdünnbaren Aminoplastharzes und

(IV) 0 bis 10 Gew.-% eines wasserverdünnbaren Polyesterharzes,

wobei die Summe der Komponenten (I) bis (IV) jeweils 100 Gew.-% beträgt, als Bindemittel in wasserverdünnbaren Einbrennlacken, die bei der Lackierung von Automobilkarosserien zur Herstellung von Steinschlagzwischengründen eingesetzt werden.

**Patentansprüche für folgenden Vertragsstaat : ES**

1. Verfahren zur Herstellung wasserverdünnbarer Einbrennlacke, die als Bindemittel eine Polyurethan-, Polyester- und ggf. Aminoplastharz-Mischung enthalten, durch Mischen und ggf. Dispergieren der einzelnen Bestandteile, dadurch gekennzeichnet, daß die Einbrennlacke als Bindemittel eine Kombination aus

(I) 20 bis 70 Gew.-%, bevorzugt 40 bis 60 Gew.-%, eines Polyurethanharzes, das eine Säurezahl von 15 bis 35, bevorzugt 20 bis 30, aufweist,

(II) 20 bis 70 Gew.-%, bevorzugt 25 bis 50 Gew.-%, eines epoxidharzmodifizierten, wasserverdünnbaren Polyesters und

(III) 0 bis 20 Gew.-% eines wasserverdünnbaren Aminoplastharzes

enthalten, wobei die Summe der Komponenten (I) bis (III) jeweils 100 Gew.-% beträgt und wobei

1.) das Polyurethanharz (I) hergestellt wird, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt wird, dessen freie Isocyanatgruppen anschließend zumindest teilweise mit einem mindestens drei Hydroxylgruppen enthaltenden Polyol, vorzugsweise Triol, umgesetzt werden, und

2.) der Polyester (II) hergestellt wird, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-) aliphatisches Strukturelement enthalten -

ein Polyester synthetisiert wird, der ein mittleres Molekulargewicht (Zahlenmittel) von unter 2000, bevorzugt 500 bis 1500, eine Säurezahl von 35-240, bevorzugt 50- 120, eine OH-Zahl von 56-320, vorzugsweise 80-200, aufweist und in dem alle ($a_1$)- und ($a_3$)- Komponenten über mindestens zwei Carboxylgruppen einkondensiert sind und

(B) dieser so gewonnene Polyester anschließend mit 0,3 bis 1,5 vorzugsweise 0,5 bis 1,0, Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt wird, der nach Neutralisation von mindestens einem Teil der freien Carboxylgruppen in wasserverdünnbarer Form vorliegt.

2. Verfahren zur Herstellung wasserverdünnbarer Einbrennlacke, die als Bindemittel eine Polyurethan-, Polyester- und ggf. Aminoplastharz-Mischung enthalten, durch Mischen und ggf. Dispergieren der einzelnen Bestandteile, dadurch gekennzeichnet, daß die Einbrennlacke als Bindemittel eine Kombination aus

(I) 40 bis 80 Gew.-%, bevorzugt 50 bis 70 Gew.-%, eines Polyurethanharzes, das eine Säurezahl von 15 bis 35, bevorzugt 20 bis 30, aufweist,

(II) 10 bis 40 Gew.-%, bevorzugt 10 bis 25 Gew.-%, eines epoxidharzmodifizierten, wasserverdünnbaren Polyesters und

(III) 0 bis 15 Gew.-% eines wasserverdünnbaren Aminoplastharzes

(IV) 0 bis 10 Gew.-% eines wasserverdünnbaren Polyesterharzes

enthalten, wobei die Summe der Komponenten (I) bis (IV) jeweils 100 Gew.-% beträgt und wobei

1.) das Polyurethanharz (I) hergestellt wird, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt wird, dessen freie Isocyanatgruppen anschließend zumindest teilweise mit einem mindestens drei Hydroxylgruppen enthaltenden Polyol, vorzugsweise Triol, umgesetzt werden, und

2.) der Polyester (II) hergestellt wird, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-) aliphatisches Strukturelement enthalten -

ein Polyester synthetisiert wird, der ein mittleres Molekulargewicht (Zahlenmittel) von unter 2000, bevorzugt 500 bis 1500, eine Säurezahl von 35-240, bevorzugt 50- 120, eine OH-Zahl von 56-320, vorzugsweise 80-200, aufweist und in dem alle ($a_1$)- und ($a_3$)- Komponenten über mindestens zwei Carboxylgruppen einkondensiert sind und

(B) dieser so gewonnene Polyester anschließend mit 0,3 bis 1,5 vorzugsweise 0,5 bis 1,0, Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt wird, der nach Neutralisation von mindestens einem Teil der freien Carboxylgruppen in wasserverdünnbarer Form vorliegt.

3. Verfahren nach Anspruch 1 oder 2, dadurch gekennzeichnet, daß ein Teil der Komponenten ($a_1$) und/oder ($a_3$) aus mindestens einer polymeren, vorzugsweise dimeren, Fettsäure besteht.

4. Verfahren nach Anspruch 1 bis 3, dadurch gekennzeichnet, daß der in Stufe (A) gewonnene Polyester mit 0,3 bis 1,5 vorzugsweise 0,5 bis 1,0, Äquivalenten pro Polyestermolekül eines mindestens eine Epoxidgruppe pro Molekül aufweisenden Umsetzungsproduktes aus einem Epoxidharz auf Basis eines Bisphenol, vorzugsweise Bisphenol A, mit einem Epoxidäquivalentgewicht von 170 bis 1000, bevorzugt 170 bis 500, und einer (cyclo-)aliphatischen Mono- oder Polycarbonsäure, vorzugsweise einer Mono- oder Polycarbonsäure mit einem mindestens 6 C-Atome aufweisenden (cyclo-)aliphatischen Strukturelement, umgesetzt wird.

5. Verfahren nach Anspruch 1 bis 4, dadurch gekennzeichnet, daß der in Stufe (A) gewonnene Polyester mit 0,3 bis 1,5, vorzugsweise 0,5 bis 1,0, Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure mit einem mindestens 18 C-Atome aufweisenden (cyclo-)aliphatischen Strukturelement, vorzugsweise einer polymeren, insbesondere einer dimeren, Fettsäure, umgesetzt wird.

6. Verfahren zur Lackierung von Automobilkarosserien, bei denen
   (1) ein Elektrotauchlack appliziert und eingebrannt wird,
   (2) ein Füllermaterial appliziert und eingebrannt wird und
   (3) eine ein- oder mehrschichtige Decklackierung appliziert und eingebrannt wird,
dadurch gekennzeichnet, daß als Füllermaterial ein wasserverdünnbarer Einbrennlack eingesetzt wird, der

(I) 20 bis 70 Gew.-%, bevorzugt 40 bis 60 Gew.-%, eines Polyurethanharzes, das eine Säurezahl von 15 bis 35, bevorzugt 20 - 30, aufweist und herstellbar ist, indem aus
   a) 4,0 bis 1,9 mol Polyether- und/oder Polyesterdiolen mit einem zahlenmittleren Molekulargewicht von 400 bis 3000,
   b) 5,6 bis 11,2 mol Diisocyanaten und
   c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,
ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 20 bis 70 Gew.-%, bevorzugt 25 bis 50 Gew.-%, eines epoxidharzmodifizierten, wasserverdünnbaren Polyesters, der herstellbar ist, indem
   (A) aus
      ($a_1$) mindestens einer mindestens drei Carboxylgruppen enthaltenden Polycarbonsäure bzw. einem reaktiven Derivat dieser Säure und/oder
      ($a_2$) mindestens einem mindestens eine Carboxylgruppe aufweisenden Polyol und
      ($a_3$) mindestens einer zwei Carboxylgruppen enthaltenden Polycarbonsäure bzw. einem reaktiven Derivat dieser Säure und
      ($a_4$) mindestens einem Polyol,
      - wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -
      ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-320, vorzugsweise 80-200, aufweist und in dem alle ($a_1$)- und ($a_3$)-Komponenten über mindestens zwei Carboxylgruppen einkondensiert sind und
      (B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt,
      und

(III) 0 bis 20 Gew.-% eines wasserverdünnbaren Aminopastharzes
enthält, wobei die Summe der Komponenten (I) bis (III) jeweils 100 Gew.-% beträgt.

7. Verfahren zur Lackierung von Automobilkarosserien, bei denen
   (1) ein Elektrotauchlack appliziert und eingebrannt wird

(2) ein Steinschlagzwischengrund appliziert und getrocknet wird

(3) ein Füller appliziert und eingebrannt wird und

(4) eine ein- oder mehrschichtige Decklackierung appliziert und eingebrannt wird,

dadurch gekennzeichnet, daß als Steinschlagzwischengrund ein wasserverdünnbarer Einbrennlack eingesetzt wird, der als Bindemittel eine Kombination aus

(I) 40 bis 80 Gew.-%, bevorzugt 50 bis 70 Gew.-%, eines Polyurethanharzes, das eine Säurezahl von 15 bis 35, bevorzugt 20 bis 30, aufweist und herstellbar ist, indem aus

a) 4,0 bis 1,9 mol Polyether- und/oder Polyesterdiolen mit einem zanlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 10 bis 40 Gew.-%, bevorzugt 10 bis 25 Gew.-%, eines epoxidharzmodifizierten wasserverdünnbaren Polyesters, der herstellbar ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-230, vorzugsweise 80-200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt,

(III) 0 bis 15 Gew.-% eines wasserverdünnbaren Aminoplastharzes und

(IV) 0 bis 10 Gew.-% eines wasserverdünnbaren Polyesterharzes

enthält, wobei die Summe der Komponenten (I) bis (IV) jeweils 100 Gew.-% beträgt.

**8.** Verfahren nach Anspruch 6 oder 7, dadurch gekennzeichnet, daß ein Teil der Komponenten ($a_1$) und/oder ($a_3$) aus mindestens einer polymeren, vorzugsweise dimeren Fettsäure besteht.

**9.** Verfahren nach Anspruch 6 bis 8, dadurch gekennzeichnet, daß der in Stufe (A) gewonnene Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure, vorzugsweise einer Mono- oder Polycarbonsäure mit einem mindestens 6 C-Atome aufweisenden (cyclo-)aliphatischen Strukturelement, umgesetzt worden ist.

**10.** Verfahren nach Anspruch 6 bis 9, dadurch gekennzeichnet, daß der in Stufe (A) gewonnene Polyester mit 0,3 bis 1,5, vorzugsweise 0,5 bis 1,0 Äquivalenten pro Polyestermolekül eines mindestens eine Epoxidgruppe pro Molekül aufweisenden Umsetzungsproduktes aus einem Epoxidharz auf Basis eines Bisphenols, vorzugsweise Bisphenol A, mit einem Epoxidäquivalentgewicht von 170 bis 1000, bevorzugt 170 bis 500, und einer (cyclo-)aliphatischen Mono- oder Polycarbonsäure mit einem mindestens 18 C-Atome aufweisenden (cyclo)-aliphatischen Strukturelement, vorzugsweise einer polymeren, insbesondere einer dimeren Fettsäure, umgesetzt worden ist.

11. Verwendung einer Kombination aus

(I) 20 bis 70 Gew.-%, bevorzugt 40 bis 60 Gew.-%, eines Polyurethanharzes, das eine Säurezahl von 15 bis 35, bevorzugt 20 - 30, aufweist und herstellbar ist, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,7 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 20 bis 70 Gew.-%, bevorzugt 25 bis 50 Gew.-%, eines epoxidharzmodifizierten, wasserverdünnbaren Polyesters, der herstellbar ist, indem

(A) aus

$(a_1)$ mindestens einer mindestens drei Carboxylgruppen enthaltenden Polycarbonsäure bzw. einem reaktiven Derivat dieser Säure und/oder

$(a_2)$ mindestens einem mindestens eine Carboxylgruppe aufweisenden Polyol und

$(a_3)$ mindestens einer zwei Carboxylgruppen enthaltenden Polycarbonsäure bzw. einem reaktiven Derivat dieser Säure und

$(a_4)$ mindestens einem Polyol,

- wobei mindestens 10 Mol-%, bevorzugt 30-70 Mol-%, der eingesetzten Komponenten $(a_1)$, $(a_2)$, $(a_3)$ und $(a_4)$ (bezogen auf $(a_1)$ + $(a_2)$ + $(a_3)$ + $(a_4)$ = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlenmittel) von unter 2000, bevorzugt 500 bis 1500, eine Säurezahl von 35-240, bevorzugt 50-120, eine OH-Zahl von 56-320, vorzugsweise 80-200, aufweist und in dem alle $(a_1)$- und $(a_3)$-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einen Teil der freien Carboxylgruppen in wasserverdünnbarer Form vorliegt , und

(III) 0 bis 20 Gew.-% eines wasserverdünnbaren Aminoplastharzes,

wobei die Summe der Komponenten (I) bis (III) jeweils 100 Gew.-% beträgt, als Bindemittel in wasserverdünnbaren Einbrennlacken, die bei der Lackierung von Automobilkarosserien zur Herstellung von Füllerschichten eingesetzt werden.

12. Verwendung einer Kombination aus

(I) 40 bis 80 Gew.-%, bevorzugt 50 bis 70 Gew.-%, eines Polyurethanharzes, das eine Säurezahl von 15 bis 35, bevorzugt 20 bis 30, aufweist und herstellbar ist, indem aus

a) 4,0 bis 1,9 mol Polyether- und/oder Polyesterdiolen mit einem zahlenmittleren Molekulargewicht von 400 bis 3000,

b) 5,6 bis 11,2 mol Diisocyanaten und

c) 1,6 bis 3,6 mol Verbindungen, die zwei gegenüber Isocyanatgruppen reaktive Gruppen enthalten, wobei zumindest ein Teil dieser Verbindungen mindestens eine zur Anionenbildung befähigte Gruppe aufweist, die vor oder nach dem Einbau der Komponente (Ic) in das Polyurethanmolekül neutralisiert wird,

ein endständige Isocyanatgruppen aufweisendes Zwischenprodukt hergestellt worden ist, dessen freie Isocyanatgruppen anschließend zumindest teilweise mit einem mindestens drei Hydroxylgruppen enthaltenden Polyol, vorzugsweise Triol, umgesetzt wurden,

(II) 10 bis 40 Gew.-%, bevorzugt 10 bis 25 Gew.-%, eines epoxidharzmodifizierten wasserverdünnbaren Polyesters, der herstellbar ist, indem

(A) aus

($a_1$) mindestens einer mindestens drei Carboxylgruppen enthaltenden Polycarbonsäure bzw. einem reaktiven Derivat dieser Säure und/oder

($a_2$) mindestens einem mindestens eine Carboxylgruppe aufweisenden Polyol und

($a_3$) mindestens einer zwei Carboxylgruppen enthaltenden Polycarbonsäure bzw. einem reaktiven Derivat dieser Säure und

($a_4$) mindestens einem Polyol,

- wobei mindestens 10 Mol-%, bevorzugt 30-70 Mol-%, der eingesetzten Komponenten ($a_1$), ($a_2$), ($a_3$) und ($a_4$) (bezogen auf ($a_1$) + ($a_2$) + ($a_3$) + ($a_4$) = 100 Mol-%) mindestens ein mindestens sechs C-Atome aufweisendes (cyclo-)aliphatisches Strukturelement enthalten -

ein Polyester synthetisiert worden ist, der ein mittleres Molekulargewicht (Zahlemittel) von unter 2000, bevorzugt 500 bis 1500, eine Säurezahl von 35-240, bevorzugt 50-120, eine OH-Zahl von 56-230, vorzugsweise 80-200, aufweist und in dem alle ($a_1$)- und ($a_3$)-Komponenten über mindestens zwei Carboxylgruppen einkondensiert sind und

(B) dieser so gewonnene Polyester anschließend mit 0,3 bis 1,5, vorzugsweise 0,5 bis 1,0 Äquivalenten pro Polyestermolekül eines ein Epoxidäquivalentgewicht von 170 bis 1000, bevorzugt 170 bis 500, aufweisenden Epoxidharzes auf Basis eines Bisphenols, vorzugsweise Bisphenol A, und/oder einem mindestens eine Epoxidgruppe pro Molekül enthaltenden Derivat dieses Epoxidharzes unter Reaktionsbedingungen, bei denen im wesentlichen nur Carboxylgruppen mit Epoxidgruppen reagieren, zu einem epoxidharzmodifizierten Polyester umgesetzt worden ist, der nach Neutralisation von mindestens einem Teil der freien Carboxylgruppen in wasserverdünnbarer Form vorliegt,

(III) 0 bis 15 Gew.-% eines wasserverdünnbaren Aminoplastharzes und

(IV) 0 bis 10 Gew.-% eines wasserverdünnbaren Polyesterharzes,

wobei die Summe der Komponenten (I) bis (IV) jeweils 100 Gew.-% beträgt, als Bindemittel in wasserverdünnbaren Einbrennlacken, die bei der Lackierung von Automobilkarosserien zur Herstellung von Steinschlagzwischengründen eingesetzt werden.

## Claims

## Claims for the following Contracting States : AT, BE, CH, DE, FR, GB, IT, LI, NL, SE

1. Water-thinnable baking paints based on a mixture of polyurethane, polyester and, if desired, aminoplast resin as binders, characterized in that the baking paints comprise as binders a combination of

(I) 20 to 70% by weight, preferably 40 to 60% by weight, of a polyurethane resin which has an acid value of 15 to 35, preferably 20 to 30, and can be prepared by preparing an intermediate having terminal isocyanate groups from

a) 4.0 to 1.9 mol of polyether and/or polyester diols with a number average molecular weight of 400 to 3000,

b) 5.6 to 11.2 mol of diisocyanates and

c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups,

(II) 20 to 70% by weight, preferably 25 to 50% by weight, of an epoxy resin-modified water-thinnable polyester which can be prepared by

(A) synthesizing a polyester from

($a_1$) at least one polycarboxylic acid containing at least three carboxyl groups or a reactive derivative of this acid, and/or

($a_2$) at least one polyol containing at least one carboxyl group, and

($a_3$) at least one polycarboxylic acid containing two carboxyl groups or a reactive derivative of this acid, and

($a_4$) at least one polyol,
- at least 10 mol %, preferably 30 to 70 mol %, of the components ($a_1$), ($a_2$), ($a_3$) and ($a_4$) (based on ($a_1$) + ($a_2$) + ($a_3$) + ($a_4$) = 100 mol %) used containing at least one (cyclo)-aliphatic structural unit containing at least six carbon atoms,

which polyester has an average molecular weight (number average) below 2000, preferably 500 to 1500, an acid value of 35 - 240, preferably 50 - 120, a hydroxyl value of 56 - 320, preferably 80 - 200, and in which polyester all ($a_1$) and ($a_3$) components are condensed in via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule, under reaction conditions where essentially only carboxyl groups react with epoxide groups, to form an epoxy resin-modified polyester which is present in water-thinnable form after at least some of the free carboxyl groups are neutralized, and

(III) 0 to 20% by weight of a water-thinnable aminoplast resin,
the sum of the components (I) to (III) being always 100% by weight.

2.  Water-thinnable baking paint, characterized in that it comprises as binder a combination of
(I) 40 to 80% by weight, preferably 50 to 70% by weight, of a polyurethane resin which has an acid value of 15 to 35, preferably 20 to 30, and can be prepared by preparing an intermediate having terminal isocyanate groups from

a) 4.0 to 1.9 mol of polyether and/or polyester diols with a number average molecular weight of 400 to 3000,
b) 5.6 to 11.2 mol of diisocyanates and
c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups,

(II) 10 to 40% by weight, preferably 10 to 25% by weight, of an epoxy resin-modified water-thinnable polyester which can be prepared by

(A) synthesizing a polyester from

($a_1$) at least one polycarboxylic acid containing at least three carboxyl groups or a reactive derivative of this acid, and/or
($a_2$) at least one polyol containing at least one carboxyl group, and
($a_3$) at least one polycarboxylic acid containing two carboxyl groups or a reactive derivative of this acid, and
($a_4$) at least one polyol,
- at least 10 mol %, preferably 30 to 70 mol %, of the components ($a_1$), ($a_2$), ($a_3$) and ($a_4$) (based on ($a_1$) + ($a_2$) + ($a_3$) + ($a_4$) = 100 mol %) used containing at least one (cyclo)-aliphatic structural unit containing at least six carbon atoms,

which polyester has an average molecular weight (number average) below 2000, preferably 500 to 1500, an acid value of 35 - 240, preferably 50 - 120, a hydroxyl value of 56 - 230, preferably 80 - 200, and in which polyester all ($a_1$) and ($a_3$) components are condensed in via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of, this epoxy resin containing at least one epoxide group per molecule, under reaction conditions where essentially only carboxyl groups react with epoxide groups, to form an epoxy resin-modified polyester which is present in water-thinnable form after at least some of the free carboxyl groups are neutralized, and

(III) 0 to 15% by weight of a water-thinnable aminoplast resin and
(IV) 0 to 10% by weight of a water-thinnable polyester resin,
the sum of the components (I) to (IV) being always 100% by weight.

3. Water-thinnable baking paint according to Claim 1 or 2, characterized in that some of the components $(a_1)$ and/or $(a_3)$ consist of at least one polymeric, preferably dimeric fatty acid.

4. Water-thinnable baking paint according to any of Claims 1 to 3, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)aliphatic monocarboxylic or polycarboxylic acid, preferably a monocarboxylic or polycarboxylic acid containing a (cyclo)aliphatic structural unit containing at least six carbon atoms.

5. Water-thinnable baking paint according to Claims 1 to 4, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)aliphatic monocarboxylic or polycarboxylic acid containing a (cyclo)aliphatic structural unit containing at least 18 carbon atoms, preferably a polymeric, particularly a dimeric fatty acid.

6. Process for painting motor vehicle bodies, in which process
   (1) an electrocoating paint is applied and baked,
   (2) a filler material is applied and baked, and
   (3) a single-coat or multicoat topcoat paint is applied and baked,
   characterized in that a water-thinnable baking paint is used as filler material which comprises
   (I) 20 to 70% by weight, preferably 40 to 60% by weight, of a polyurethane resin which has an acid value of 15 to 35, preferably 20 to 30, and which can be prepared by preparing an intermediate having terminal isocyanate groups from
     a) 4.0 to 1.9 mol of polyether and/or polyester diols with a number average molecular weight of 400 to 3000,
     b) 5.6 to 11.2 mol of diisocyanates and
     c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,
   at least some of the free isocyanate groups of which intermediate are subsequently reacted with a polyol, preferably a triol, containing at least three hydroxyl groups,
   (II) 20 to 70% by weight, preferably 25 to 50% by weight, of an epoxy resin-modified water-thinnable polyester which can be prepared by
     (A) synthesizing a polyester from
       $(a_1)$ at least one polycarboxylic acid containing at least three carboxyl groups or a reactive derivative of this acid, and/or
       $(a_2)$ at least one polyol containing at least one carboxyl group, and
       $(a_3)$ at least one polycarboxylic acid containing two carboxyl groups or a reactive derivative of this acid, and
       $(a_4)$ at least one polyol,
       - at least 10 mol %, preferably 30 - 70 mol % of the components $(a_1)$, $(a_2)$, $(a_3)$ and $(a_4)$ (based on $(a_1)$ + $(a_2)$ + $(a_3)$ + $(a_4)$ = 100 mol %) used containing at least one (cyclo)-aliphatic structural unit containing at least six carbon atoms -
       which polyester has an average molecular weight (number average) below 2000, preferably 500 to 1500, an acid value of 35 - 240, preferably 50 - 120, a hydroxyl value of 56 - 320, preferably 80 - 200, and in which polyester all $(a_1)$ and $(a_3)$ components are incorporated via at least two carboxyl groups, and
     (B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule under reaction conditions where essentially only carboxyl groups react with epoxide groups, to form an epoxy resin-modified polyester which is present in water-thinnable form after at least some of the free

26

carboxyl groups are neutralized, and

(III) 0 to 20% by weight of a water-thinnable aminoplast resin,

the sum of the components (I) to (III) being always 100% by weight.

7. Process for painting motor vehicle bodies, in which process

(1) an electrocoating paint is applied and baked,

(2) an intermediate stone chip resistant coat is applied and dried,

(3) a filler is applied and baked, and

(4) a single-coat or multicoat topcoat paint is applied and baked,

characterized in that a water-thinnable baking paint is used as an intermediate stone chip resistant coat, which paint comprises as binders a combination of

(I) 40 to 80% by weight, preferably 50 to 70% by weight, of a polyurethane resin which has an acid value of 15 to 35, preferably 20 to 30, and can be prepared by preparing an intermediate having terminal isocyanate groups from

a) 4.0 to 1.9 mol of polyether and/or polyester diols with a number average molecular weight of 400 to 3000,

b) 5.6 to 11.2 mol of diisocyanates and

c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups,

(II) 10 to 40% by weight, preferably 10 to 25% by weight, of an epoxy resin-modified water-thinnable polyester which can be prepared by

(A) synthesizing a polyester from

($a_1$) at least one polycarboxylic acid containing at least three carboxyl groups or a reactive derivative of this acid, and/or

($a_2$) at least one polyol containing at least one carboxyl group, and

($a_3$) at least one polycarboxylic acid containing two carboxyl groups or a reactive derivative of this acid, and

($a_4$) at least one polyol,

- at least 10 mol %, preferably 30 - 70 mol %, of the components ($a_1$), ($a_2$), ($a_3$) and ($a_4$) (based on ($a_1$) + ($a_2$), ($a_3$) + ($a_4$) = 100 mol %) used containing at least one (cyclo)aliphatic structural unit containing at least six carbon atoms -

which polyester has an average molecular weight (number average) below 2000, preferably 500 to 1500, an acid value of 35 - 240, preferably 50 - 120, a hydroxyl value of 56 - 230, preferably 80 - 200, and in which polyester all ($a_1$) and ($a_3$) components are incorporated via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule under reaction conditions where essentially only carboxyl groups, react with epoxide groups, to form an epoxy resin-modified polyester which is present in water-thinnable form after at least some of the free carboxyl groups are neutralized,

(III) 0 to 15% by weight of a water-thinnable aminoplast resin and

(IV) 0 to 10% by weight of a water-thinnable polyester resin,

the sum of the components (I) to (IV) being always 100% by weight.

8. Process according to Claim 6 or 7, characterized in that the sum of the components ($a_1$) and/or ($a_3$) consists of at least one polymeric, preferably dimeric fatty acid.

9. Process according to Claims 6 to 8, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)-aliphatic monocarboxylic or polycarboxylic acid, preferably a monocarboxylic or polycarboxylic acid

27

EP 0 339 433 B1

containing a (cyclo)aliphatic structural unit containing at least six carbon atoms.

10. Process according to Claim 6 to 9, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)-aliphatic monocarboxylic or polycarboxylic acid containing a (cyclo)aliphatic structural unit containing at least 18 carbon atoms, preferably a polymeric, particularly a dimeric fatty acid.

11. Use of a combination of
(I) 20 to 70% by weight, preferably 40 to 60% by weight, of a polyurethane resin which has an acid value of 15 to 35, preferably 20 to 30, and can be prepared by preparing an intermediate having terminal isocyanate groups, from
a) 4.0 to 1.9 mol of polyether and/or polyester diols with a number average molecular weight of 400 to 3000,
b) 5.6 to 11.2 mol of diisocyanates and
c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,
at least some of the free isocyanate groups of which intermediate are subsequently reacted with a polyol, preferably a triol, containing at least three hydroxyl groups,
(II) 20 to 70% by weight, preferably 25 to 50% by weight, of an epoxy resin-modified water-thinnable polyester which can be prepared by
(A) synthesizing a polyester from
($a_1$) at least one polycarboxylic acid containing at least three carboxyl groups or a reactive derivative of this acid, and/or
($a_2$) at least one polyol containing at least one carboxyl group, and
($a_3$) at least one polycarboxylic acid containing two carboxyl groups or a reactive derivative of this acid, and
($a_4$) at least one polyol,
- at least 10 mol %, preferably 30 - 70 mol % of the components ($a_1$), ($a_2$), ($a_3$) and ($a_4$) (based on ($a_1$) + ($a_2$) + ($a_3$) + ($a_4$) = 100 mol %) used containing at least one (cyclo)-aliphatic structural unit containing at least six carbon atoms,
which polyester has an average molecular weight (number average) below 2000, preferably 500 to 1500, an acid value of 35 - 240, preferably 50 - 120, a hydroxyl value of 56 - 320, preferably 80 - 200, and in which polyester all ($a_1$) and ($a_3$) components are incorporated via at least two carboxyl groups, and
(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule, under reaction conditions where essentially only carboxyl groups react with epoxide groups, to form an epoxy resin-modified polyester which is present in water-thinnable form after at least some of the free carboxyl groups are neutralized, and
(III) 0 to 20% by weight of a water-thinnable aminoplast resin,
the sum of the components (I) to (III) being always 100% by weight, as binders, in water-thinnable baking paints which are employed for the production of filler coats in the painting of motor vehicle bodies.

12. Use of a combination of
(I) 40 to 80% by weight, preferably 50 to 70% by weight, of a polyurethane resin which has an acid value of 15 to 35, preferably 20 to 30, and can be prepared by preparing an intermediate having terminal isocyanate groups from
a) 4.0 to 1.9 mol of polyether and/or polyester diols with a number average molecular weight of 400 to 3000,
b) 5.6 to 11.2 mol of diisocyanates and

28

c) 1.6 to 3.6 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups,

(II) 10 to 40% by weight, preferably 10 to 25% by weight, of an epoxy resin-modified water-thinnable polyester which can be prepared by

(A) synthesizing a polyester from

($a_1$) at least one polycarboxylic acid containing at least three carboxyl groups or a reactive derivative of this acid, and/or

($a_2$) at least one polyol containing at least one carboxyl group, and

($a_3$) at least one polycarboxylic acid containing two carboxyl groups or a reactive derivative of this acid, and

($a_4$) at least one polyol
- at least 10 mol %, preferably 30 - 70 mol % of the components ($a_1$), ($a_2$), ($a_3$) and ($a_4$) (based on ($a_1$) + ($a_2$) + ($a_3$) + ($a_4$) = 100 mol %) used containing at least one (cyclo)-aliphatic structural unit containing at least six carbon atoms,

which polyester has an average molecular weight (number average) below 2000, preferably 500 to 1500, an acid value of 35 - 240, preferably 50 - 120, a hydroxyl value of 56 - 230, preferably 80 to 200, and in which polyester all ($a_1$) and ($a_3$) components are incorporated via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule under reaction conditions where essentially only carboxyl groups react with epoxide groups, to form an epoxy resin-modified polyester which is present in water-thinnable form after at least some of the free carboxyl groups are neutralized,

(III) 0 to 15% by weight of a water-thinnable aminoplast resin and

(IV) 0 to 10% by weight of a water-thinnable polyester resin,

the sum of the components (I) to (IV) being always 100% by weight, as binders in water-thinnable baking paints which are employed for the production of intermediate stone chip resistant coats in the painting of motor vehicle bodies.

**Claims for the following Contracting State : ES**

1. Process for preparing water-thinnable baking paints which comprise as binders a polyurethane, polyester and, if desired, aminoplast resin mixture, by mixing and, if desired, dispersing the individual components, characterized in that the baking paints comprise as binders a combination of

(I) 20 to 70% by weight, preferably 40 to 60% by weight, of a polyurethane resin which has an acid value of 15 to 35, preferably 20 to 30,

(II) 20 to 70% by weight, preferably 25 to 50% by weight, of an epoxy resin-modified water-thinnable polyester and

(III) 0 to 20% by weight of a water-thinnable aminoplast resin,

the sum of the components (I) to (III) being always 100% by weight and in which process

1.) the polyurethane resin (I) is prepared by preparing an intermediate having terminal isocyanate groups from

a) 4.0 to 1.9 mol of polyether and/or polyester diols with a number average molecular weight of 400 to 3000,

b) 5.6 to 11.2 mol of diisocyanates and

c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups, and

2.) the polyester (II) is prepared by

(A) synthesizing a polyester from

(a₁) at least one polycarboxylic acid containing at least three carboxyl groups or a reactive derivative of this acid, and/or

(a₂) at least one polyol containing at least one carboxyl group, and

(a₃) at least one polycarboxylic acid containing two carboxyl groups or a reactive derivative of this acid, and

(a₄) at least one polyol,

- at least 10 mol %, preferably 30 to 70 mol %, of the components (a₁), (a₂), (a₃) and (a₄) (based on (a₁) + (a₂) + (a₃) + (a₄) = 100 mol %) used containing at least one (cyclo)-aliphatic structural unit containing at least six carbon atoms,

which polyester has an average molecular weight (number average) below 2000, preferably 500 to 1500, an acid value of 35 - 240, preferably 50 - 120, a hydroxyl value of 56 - 320, preferably 80 - 200, and in which polyester all (a₁) and (a₃) components are condensed in via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule, under reaction conditions where essentially only carboxyl groups react with epoxide groups, to form an epoxy resin-modified polyester which is present in water-thinnable form after at least some of the free carboxyl groups are neutralized.

2. Process for preparing water-thinnable baking paints which comprise as binders a polyurethane, polyester and, if desired, aminoplast resin mixture, by mixing and, if desired, dispersing the individual components, characterized in that the baking paints comprise as binders a combination of

(I) 40 to 80% by weight, preferably 50 to 70% by weight, of a polyurethane resin which has an acid value of 15 to 35, preferably 20 to 30,

(II) 10 to 40% by weight, preferably 10 to 25% by weight, of an epoxy resin-modified water-thinnable polyester and

(III) 0 to 15% by weight of a water-thinnable aminoplast resin,

(IV) 0 to 10% by weight of a water-thinnable polyester resin,

the sum of the components (I) to (IV) being always 100% by weight and in which process

1.) the polyurethane resin (I) is prepared by preparing an intermediate having terminal isocyanate groups from

a) 4.0 to 1.9 mol of polyether and/or polyester diols with a number average molecular weight of 400 to 3000,

b) 5.6 to 11.2 mol of diisocyanates and

c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups, and

2.) the polyester (II) is prepared by

(A) synthesizing a polyester from

(a₁) at least one polycarboxylic acid containing at least three carboxyl groups or a reactive derivative of this acid, and/or

(a₂) at least one polyol containing at least one carboxyl group, and

(a₃) at least one polycarboxylic acid containing two carboxyl groups or a reactive derivative of this acid, and

(a₄) at least one polyol,

- at least 10 mol %, preferably 30 to 70 mol %, of the components (a₁), (a₂), (a₃) and (a₄) (based on (a₁) + (a₂) + (a₃) + (a₄) = 100 mol %) used containing at least one (cyclo)-aliphatic structural unit containing at least six carbon atoms,

which polyester has an average molecular weight (number average) below 2000, preferably 500 to 1500, an acid value of 35 - 240, preferably 50 - 120, a hydroxyl value of 56 - 320, preferably 80 - 200, and in which polyester all (a₁) and (a₃) components are condensed in via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule, under reaction conditions where essentially only carboxyl groups react with epoxide groups, to form an epoxy resin-modified polyester which is present in water-thinnable form after at least some of the free carboxyl groups are neutralized.

3. Process according to Claim 1 or 2, characterized in that some of the components $(a_1)$ and/or $(a_3)$ consist of at least one polymeric, preferably dimeric fatty acid.

4. Process according to Claim 1 to 3, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)-aliphatic monocarboxylic or polycarboxylic acid, preferably a monocarboxylic or polycarboxylic acid containing a (cyclo)aliphatic structural unit containing at least six carbon atoms.

5. Process according to Claim 1 to 4, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)-aliphatic monocarboxylic or polycarboxylic acid containing a (cyclo)aliphatic structural unit containing at least 18 carbon atoms, preferably a polymeric, particularly a dimeric fatty acid.

6. Process for painting motor vehicle bodies, in which process
    (1) an electrocoating paint is applied and baked,
    (2) a filler material is applied and baked, and
    (3) a single-coat or multicoat topcoat paint is applied and baked,
characterized in that a water-thinnable baking paint is used as filler material which comprises
    (I) 20 to 70% by weight, preferably 40 to 60% by weight, of a polyurethane resin which has an acid value of 15 to 35, preferably 20 to 30, and which can be prepared by preparing an intermediate having terminal isocyanate groups from
        a) 4.0 to 1.9 mol of polyether and/or polyester diols with a number average molecular weight of 400 to 3000,
        b) 5.6 to 11.2 mol of diisocyanates and
        c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,
    at least some of the free isocyanate groups of which intermediate are subsequently reacted with a polyol, preferably a triol, containing at least three hydroxyl groups,
    (II) 20 to 70% by weight, preferably 25 to 50% by weight, of an epoxy resin-modified water-thinnable polyester which can be prepared by
        (A) synthesizing a polyester from
            $(a_1)$ at least one polycarboxylic acid containing at least three carboxyl groups or a reactive derivative of this acid, and/or
            $(a_2)$ at least one polyol containing at least one carboxyl group, and
            $(a_3)$ at least one polycarboxylic acid containing two carboxyl groups or a reactive derivative of this acid, and
            $(a_4)$ at least one polyol,
            - at least 10 mol %, preferably 30 - 70 mol % of the components $(a_1)$, $(a_2)$, $(a_3)$ and $(a_4)$ (based on $(a_1)$ + $(a_2)$ + $(a_3)$ + $(a_4)$ = 100 mol %) used containing at least one (cyclo)-aliphatic structural unit containing at least six carbon atoms -
        which polyester has an average molecular weight (number average) below 2000, preferably 500 to 1500, an acid value of 35 - 240, preferably 50 - 120, a hydroxyl value of 56 - 320, preferably 80 - 200, and in which polyester all $(a_1)$ and $(a_3)$ components are incorporated via at least two carboxyl groups, and

31

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule under reaction conditions where essentially only carboxyl groups react with epoxide groups, to form an epoxy resin-modified polyester which is present in water-thinnable form after at least some of the free carboxyl groups are neutralized, and

(III) 0 to 20% by weight of a water-thinnable aminoplast resin,

the sum of the components (I) to (III) being always 100% by weight.

7. Process for painting motor vehicle bodies, in which process

(1) an electrocoating paint is applied and baked,

(2) an intermediate stone chip resistant coat is applied and dried,

(3) a filler is applied and baked, and

(4) a single-coat or multicoat topcoat paint is applied and baked,

characterized in that a water-thinnable baking paint is used as an intermediate stone chip resistant coat, which paint comprises as hinders a combination of

(I) 40 to 80% by weight, preferably 50 to 70% by weight, of a polyurethane resin which has an acid value of 15 to 35, preferably 20 to 30, and can be prepared by preparing an intermediate having terminal isocyanate groups from

a) 4.0 to 1.9 mol, of polyether and/or polyester diols with a number average molecular weight of 400 to 3000,

b) 5.6 to 11.2 mol of diisocyanates and

c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups,

(II) 10 to 40% by weight, preferably 10 to 25% by weight, of an epoxy resin-modified water-thinnable polyester which can be prepared by

(A) synthesizing a polyester from

($a_1$) at least one polycarboxylic acid containing at least three carboxyl groups or a reactive derivative of this acid, and/or

($a_2$) at least one polyol containing at least one carboxyl group, and

($a_3$) at least one polycarboxylic acid containing two carboxyl groups or a reactive derivative of this acid, and

($a_4$) at least one polyol,

- at least 10 mol %, preferably 30 - 70 mol %, of the components ($a_1$), ($a_2$), ($a_3$) and ($a_4$) (based on ($a_1$) + ($a_2$), ($a_3$) + ($a_4$) = 100 mol %) used containing at least one (cyclo)aliphatic structural unit containing at least six carbon atoms -

which polyester has an average molecular weight (number average) below 2000, preferably 500 to 1500, an acid value of 35 - 240, preferably 50 - 120, a hydroxyl value of 56 - 230, preferably 80 - 200, and in which polyester all ($a_1$) and ($a_3$) components are incorporated via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule under reaction conditions where essentially only carboxyl groups react with epoxide groups, to form an epoxy resin-modified polyester which is present in water-thinnable form after at least some of the free carboxyl groups are neutralized,

(III) 0 to 15% by weight of a water-thinnable aminoplast resin and

(IV) 0 to 10% by weight of a water-thinnable polyester resin,

the sum of the components (I) to (IV) being always 100% by weight.

8. Process according to Claim 6 or 7, characterized in that the sum of the components ($a_1$) and/or ($a_3$) consists of at least one polymeric, preferably dimeric fatty acid.

**9.** Process according to Claim 6 to 8, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)-aliphatic monocarboxylic or polycarboxylic acid, preferably a monocarboxylic or polycarboxylic acid containing a (cyclo)aliphatic structural unit containing at least six carbon atoms.

**10.** Process according to Claim 6 to 9, characterized in that the polyester obtained in stage (A) is reacted with 0.3 to 1.5, preferably 0.5 to 1.0 equivalents per polyester molecule of a reaction product having at least one epoxide group per molecule, obtained from an epoxy resin based on a bisphenol, preferably bisphenol A, having an epoxide equivalent weight of 170 to 1000, preferably 170 to 500, and a (cyclo)-aliphatic monocarboxylic or polycarboxylic acid containing a (cyclo)aliphatic structural unit containing at least 18 carbon atoms, preferably a polymeric, particularly a dimeric fatty acid.

**11.** Use of a combination of

(I) 20 to 70% by weight, preferably 40 to 60% by weight, of a polyurethane resin which has an acid value of 15 to 35, preferably 20 to 30, and can be prepared by preparing an intermediate having terminal isocyanate groups, from

a) 4.0 to 1.9 mol of polyether and/or polyester diols with a number average molecular weight of 400 to 3000,

b) 5.6 to 11.2 mol of diisocyanates and

c) 1.6 to 3.7 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups,

(II) 20 to 70% by weight, preferably 25 to 50% by weight, of an epoxy resin-modified water-thinnable polyester which can be prepared by

(A) synthesizing a polyester from

($a_1$) at least one polycarboxylic acid containing at least three carboxyl groups or a reactive derivative of this acid, and/or

($a_2$) at least one polyol containing at least one carboxyl group, and

($a_3$) at least one polycarboxylic acid containing two carboxyl groups or a reactive derivative of this acid, and

($a_4$) at least one polyol,

- at least 10 mol %, preferably 30 - 70 mol % of the components ($a_1$), ($a_2$), ($a_3$) and ($a_4$) (based on ($a_1$) + ($a_2$) + ($a_3$) + ($a_4$) = 100 mol %) used containing at least one (cyclo)-aliphatic structural unit containing at least six carbon atoms,

which polyester has an average molecular weight (number average) below 2000, preferably 500 to 1500, an acid value of 35 - 240, preferably 50 - 120, a hydroxyl value of 56 - 320, preferably 80 - 200, and in which polyester all ($a_1$) and ($a_3$) components are incorporated via at least two carboxyl groups, and

(B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule under reaction conditions where essentially only carboxyl groups react with epoxide groups, to form an epoxy resin-modified polyester which is present in water-thinnable form after at least some of the free carboxyl groups are neutralized, and

(III) 0 to 20% by weight of a water-thinnable aminoplast resin,

the sum of the components (I) to (III) being always 100% by weight, as binders, in water-thinnable baking paints which are employed for the production of filler coats in the painting of motor vehicle bodies.

**12.** Use of a combination of

(I) 40 to 80% by weight, preferably 50 to 70% by weight, of a polyurethane resin which has an acid value of 15 to 35, preferably 20 to 30, and can be prepared by preparing an intermediate having terminal isocyanate groups from

    a) 4.0 to 1.9 mol of polyether and/or polyester diols with a number average molecular weight of 400 to 3000,

    b) 5.6 to 11.2 mol of diisocyanates and

    c) 1.6 to 3.6 mol of compounds which contain two groups reactive toward isocyanate groups, at least some of these compounds having at least one group capable of forming anions which is neutralized either before or after the incorporation of the component (Ic) into the polyurethane molecule,

at least some of the free isocyanate groups of which intermediate are subsequently reacted with a polyol, preferably a triol, containing at least three hydroxyl groups,

(II) 10 to 40% by weight, preferably 10 to 25% by weight, of an epoxy resin-modified water-thinnable polyester which can be prepared by

    (A) synthesizing a polyester from

        ($a_1$) at least one polycarboxylic acid containing at least three carboxyl groups or a reactive derivative of this acid, and/or

        ($a_2$) at least one polyol containing at least one carboxyl group, and

        ($a_3$) at least one polycarboxylic acid containing two carboxyl groups or a reactive derivative of this acid, and

        ($a_4$) at least one polyol

        - at least 10 mol %, preferably 30 - 70 mol % of the components ($a_1$), ($a_2$), ($a_3$) and ($a_4$) (based on ($a_1$) + ($a_2$) + ($a_3$) + ($a_4$) = 100 mol %) used containing at least one (cyclo)-aliphatic structural unit containing at least six carbon atoms,

    which polyester has an average molecular weight (number average) below 2000, preferably 500 to 1500, an acid value of 35 - 240, preferably 50 - 120, a hydroxyl value of 56 - 230, preferably 80 to 200, and in which polyester all ($a_1$) and ($a_3$) components are incorporated via at least two carboxyl groups, and

    (B) subsequently reacting this polyester obtained in this manner with 0.3 to 1.5, preferably 0.5 to 1.0 equivalents per polyester molecule of an epoxy resin having an epoxide equivalent weight of 170 to 1000, preferably 170 to 500, based on a bisphenol, preferably bisphenol A, and/or with a derivative of this epoxy resin containing at least one epoxide group per molecule under reaction conditions where essentially only carboxyl groups react with epoxide groups, to form an epoxy resin-modified polyester which is present in water-thinnable form after at least some of the free carboxyl groups are neutralized,

    (III) 0 to 15% by weight of a water-thinnable aminoplast resin and

    (IV) 0 to 10% by weight of a water-thinnable polyester resin,

the sum of the components (I) to (IV) being always 100% by weight, as binders in water-thinnable baking paints which are employed for the production of intermediate stone chip resistant coats in the painting of motor vehicle bodies.

## Revendications

**Revendications pour les Etats contractants suivants : AT, BE, CH, DE, FR, GB, IT, LI, NL, SE**

1.    Laques à cuire diluables à l'eau à base d'un mélange de résines polyuréthane, polyester et, la cas échéant, aminoplaste en tant que liant, caractérisées an ce que les laques à cuire an tant que liant contiennent une combinaison

    (I) de 20 à 70 % en poids, de préférence de 40 à 60 % en poids d'une résine polyuréthane, qui présente un indice d'acidité de 15 à 35, de préférence de 20 à 30, et peut se préparer en ce qu'à partir

        a) de 4,0 à 1,9 moles de polyétherdiols et/ou de polyesterdiols ayant un poids moléculaire moyen au nombre de 400 à 3000,

        b) de 5,6 à 11,2 moles de diisocyanates et

        c) de 1,6 à 3,7 moles de composés, qui contiennent deux groupes réactifs vis-à-vis des groupes isocyanates, au moins une partie de cas composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 20 à 70 % en poids, de préférence de 25 à 50 % en poids d'un polyester diluable à l'eau, modifié à la résine époxyde, qui peut être préparé en ce que

(A) à partir

(a$_1$) d'au moins un acide polycarboxylique contenant au moins trois groupes carboxyles, respectivement un dérivé réactif de cet acide et/ou

(a$_2$) d'au moins un polyol présentant au moins un groupe carboxyle et

(a$_3$) d'au moins un acide polycarboxylique contenant deux groupes carboxyles, respectivement un dérivé réactif de cet acide et

(a$_4$) d'au moins un polyol,

- au moins 10 % en moles, de préférence 30-70 % en moles des composants utilisés (a$_1$), (a$_2$), (a$_3$) et (a$_4$) (par rapport à (a$_1$) + (a$_2$) + (a$_3$) + (a$_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-320, de préférence 80-200, et dans lequel tous les composants (a$_1$) et (a$_3$) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau, et

(III) de 0 à 20 % en poids d'une résine aminoplaste diluable à l'eau,

la somme des composants (I) à (III) étant à chaque fois de 100 % en poids.

2. Laque à cuire diluable à l'eau, caractérisée en ce qu'elle contient, en tant que liant, une combinaison

(I) de 40 à 80 % en poids, de préférence de 50 à 70 % en poids d'une résine polyuréthane, qui présente un indice d'acidité de 15 à 35, de préférence de 20 à 30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 10 à 40 % en poids, de préférence de 10 à 25 % en poids d'un polyester diluable à l'eau, modifié à la résine époxyde, qui peut être préparé en ce que

(A) à partir

(a$_1$) d'au moins un acide polycarboxylique contenant au moins trois groupes carboxyles, respectivement un dérivé réactif de cet acide et/ou

(a$_2$) d'au moins un polyol présentant au moins un groupe carboxyle et

(a$_3$) d'au moins un acide polycarboxylique contenant deux groupes carboxyles, respectivement un dérivé réactif de cet acide et

(a$_4$) d'au moins un polyol,

- au moins 10 % en moles, de préférence 30-70 % en moles des composants utilisés (a$_1$), (a$_2$), (a$_3$) et (a$_4$) (par rapport à (a$_1$) + (a$_2$) + (a$_3$) + (a$_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-230, de préférence 80-200, et dans lequel tous les composants (a$_1$) et (a$_3$) sont condensés par l'intermédiaire d'au moins deux groupes carboxyles et en ce que

EP 0 339 433 B1

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau, et

(III) de 0 à 15 % en poids d'une résine aminoplaste diluable à l'eau, et

(IV) de 0 à 10 % en poids d'une résine polyester diluable à l'eau,

la somme des composants (I) à (IV) étant à chaque fois de 100 % en poids.

3. Laque à cuire diluable à l'eau selon la revendication 1 ou 2, caractérisée en ce qu'une partie des composants ($a_1$) et/ou ($a_3$) se compose d'au moins un acide gras polymère, de préférence un acide gras dimère.

4. Laque à cuire diluable à l'eau selon l'une quelconque des revendications 1 à 3, caractérisée en ce que l'on a fait réagir le polyester produit dans l'étape (A) avec de 0,3 à 1,5, de préférence de 0,5 à 1,0 équivalents par molécule de polyester d'un produit de réaction présentant au moins un groupe époxyde par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique, de préférence un acide monocarboxylique ou polycarboxylique ayant un élément de structure (cyclo)aliphatique présentant au moins 6 atomes de C.

5. Laque à cuire diluable à l'eau selon les revendications 1 à 4, caractérisée en ce que l'on a fait réagir le polyester produit dans l'étape (A) avec de 0,3 à 1,5, de préférence de 0,5 à 1,0 équivalents par molécule de polyester d'un produit de réaction présentant au moins un groupe époxyde par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique ayant un élément de structure (cyclo)aliphatique présentant au moins 18 atomes de C, de préférence d'un acide gras polymère, en particulier d'un acide gras dimère.

6. Procédé de laquage de carrosseries d'automobiles, lors duquel

(1) on applique et on cuit une laque pour trempage électrophorétique,

(2) on applique et on cuit un matériau de pigment de charge et

(3) on applique et on cuit un émail de finition monocouche ou multicouche,

caractérisé en ce que l'on utilise en tant que matériau de pigment de charge une laque à cuire diluable à l'eau qui contient

(I) de 20 à 70 % en poids, de préférence de 40 à 60 % en poids d'une résine polyuréthane, qui présente un indice d'acidité de 15 à 35, de préférence de 20-30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 20 à 70 % en poids, de préférence de 25 à 50 % en poids d'un polyester diluable à l'eau, modifié à la résine époxyde, qui peut être préparé en ce que

(A) à partir

($a_1$) d'au moins un acide polycarboxylique contenant au moins trois groupes carboxyles, respectivement un dérivé réactif de cet acide et/ou

($a_2$) d'au moins un polyol présentant au moins un groupe carboxyle et

36

EP 0 339 433 B1

(a₃) d'au moins un acide polycarboxylique contenant deux groupes carboxyles, respectivement un dérivé réactif de cet acide et

(a₄) d'au moins un polyol,

- au moins 10 % en moles, de préférence 30-70 % en moles des composants utilisés (a₁), (a₂), (a₃) et (a₄) (par rapport à (a₁) + (a₂) + (a₃) + (a₄) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-320, de préférence 80-200, et dans lequel tous les composants (a₁) et (a₃) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau, et

(III) de 0 à 20 % en poids d'une résine aminoplaste diluable à l'eau,

la somme des composants (I) à (III) étant à chaque fois de 100 % en poids.

7. Procédé de laquage de carrosseries d'automobiles, lors duquel

(1) on applique et on cuit une laque pour trempage électrophorétique,

(2) on applique et on sèche une couche intermédiaire antigravillonnage,

(3) on applique et on cuit un pigment de charge et

(4) on applique et on cuit un émail de finition monocouche ou multicouche,

caractérisé en ce que l'on utilise en tant que couche intermédiaire antigravillonnage une laque à cuire diluable à l'eau, qui en tant que liant contient une combinaison

(I) de 40 à 80 % en poids, de préférence de 50 à 70 % en poids d'une résine polyuréthane, qui présente un indice d'acidité de 15 à 35, de préférence de 20 à 30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 modes de diisocyanates et

c) de 1,6 à 3,7 modes de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 10 à 40 % en poids, de préférence de 10 à 25 % en poids d'un polyester diluable à l'eau, modifié à la résine époxyde, qui peut être préparé en ce que

(A) à partir

(a₁) d'au moins un acide polycarboxylique contenant au moins trois groupes carboxyles, respectivement un dérivé réactif de cet acide et/ou

(a₂) d'au moins un polyol présentant au moins un groupe carboxyle et

(a₃) d'au moins un acide polycarboxylique contenant deux groupes carboxyles, respectivement un dérivé réactif de cet acide et

(a₄) d'au moins un polyol,

- au moins 10 % en moles, de préférence 30-70 % en moles des composants utilisés (a₁), (a₂), (a₃) et (a₄) (par rapport à (a₁) + (a₂) + (a₃) + (a₄) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-230, de préférence 80-200, et dans lequel tous les composants (a₁) et (a₃) sont condensés par l'intermédiaire d'au moins deux groupes carboxyles et en ce que

37

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxryles libres, sous forme soluble dans l'eau,

(III) de 0 à 15 % en poids d'une résine aminoplaste diluable à l'eau, et

(IV) de 0 à 10 % en poids d'une résine polyester diluable à l'eau,

la somme des composants (I) à (IV) étant à chaque fois de 100 % en poids.

8. Procédé selon la revendication 6 ou 7, caractérisé en ce qu'une partie des composants ($a_1$) et/ou ($a_3$) se compose d'au moins un acide gras polymère, de préférence d'un acide gras dimère.

9. Procédé selon les revendications 6 à 8, caractérisé en ce que l'on a fait réagir le polyester produit dans l'étape (A) avec de 0,3 à 1,5, de préférence de 0,5 à 1,0 équivalents par molécule de polyester d'un produit de réaction présentant au moins un groupe époxyde par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique, de préférence un acide monocarboxylique ou polycarboxylique ayant un élément de structure (cyclo)-aliphatique présentant au moins 6 atomes de C.

10. Procédé selon les revendications 6 à 9, caractérisé en ce que l'on a fait réagir le polyester produit dans l'étape (A) avec de 0,3 à 1,5, de préférence de 0,5 à 1,0 équivalents par molécule de polyester d'un produit de réaction présentant au moins un groupe époxyde par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique ayant un élément de structure (cyclo)aliphatique présentant au moins 18 atomes de C, de préférence d'un acide gras polymère, en particulier d'un acide gras dimère.

11. Utilisation d'une combinaison

(I) de 20 à 70 % en poids, de préférence de 40 à 60 % en poids d'une résine polyuréthane, qui présente un indice d'acidité de 15-35, de préférence de 20-30, et peut se préparer en ce qu'à partir

a) de 4,0 à 1,9 moles de polyétherdiols et/ou polyesterdiols ayant un poids moléculaire moyen au nombre de 400 à 3000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 20 à 70 % en poids, de préférence de 25 à 50 % en poids d'un polyester diluable à l'eau, modifié à la résine époxyde, qui peut être préparé en ce que

(A) à partir

($a_1$) d'au moins un acide polycarboxylique contenant au moins trois groupes carboxyles, respectivement un dérivé réactif de cet acide et/ou

($a_2$) d'au moins un polyol présentant au moins un groupe carboxyle et

($a_3$) d'au moins un acide polycarboxylique contenant deux groupes carboxyles, respectivement un dérivé réactif de cet acide et

($a_4$) d'au moins un polyol,

- au moins 10 % en moles, de préférence 30-70 % en moles des composants utilisés ($a_1$), ($a_2$), ($a_3$) et ($a_4$) (par rapport à ($a_1$) + ($a_2$) + ($a_3$) + ($a_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-320, de préférence 80-200, et dans lequel tous les composants ($a_1$) et ($a_3$) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent après neutralisation d'au moins une partie des groupes hydroxyles libres sous forme soluble dans l'eau, et

(III) de 0 à 20 % en poids d'une résine aminoplaste diluable à l'eau,

la somme des composants (I) à (III) étant à chaque fois de 100 % en poids, en tant que liant dans les laques à cuire diluables à l'eau, qui sont utilisées lors du laquage de carrosseries d'automobiles pour la fabrication de couches de pigment de charge.

**12.** Utilisation d'une combinaison

(I) de 40 à 80 % en poids, de préférence de 50 à 70 % en poids d'une résine polyuréthane, qui présente un indice d'acidité de 15 à 35, de préférence de 20 à 30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,6 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 10 à 40 % en poids, de préférence de 10 à 25 % en poids d'un polyester diluable à l'eau, modifié à la résine époxyde, qui peut être préparé en ce que

(A) à partir

($a_1$) d'au moins un acide polycarboxylique contenant au moins trois groupes carboxyles, respectivement un dérivé réactif de cet acide et/ou

($a_2$) d'au moins un polyol présentant au moins un groupe carboxyle et

($a_3$) d'au moins un acide polycarboxylique contenant deux groupes carboxyles, respectivement un dérivé réactif de cet acide et

($a_4$) d'au moins un polyol,

- au moins 10 % en moles, de préférence 30-70 % en moles des composants utilisés ($a_1$), ($a_2$), ($a_3$) et ($a_4$) (par rapport à ($a_1$) + ($a_2$) + ($a_3$) + ($a_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-230, de préférence 80-200, et dans lequel tous les composants ($a_1$) et ($a_3$) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau,

(III) de 0 à 15 % en poids d'une résine aminoplaste diluable à l'eau et

(IV) de 0 à 10 % en poids d'une résine polyester diluable à l'eau,

la somme des composants (I) à (IV) étant à chaque fois de 100 % en poids, en tant que liant dans des laques à cuire diluables à l'eau, qui sont utilisées lors du laquage de carrosseries d'automobiles pour la fabrication de couches intermédiaires antigravillonnage.

**Revendications pour l'Etat contractant suivant : ES**

1. Procédé de préparation de laques à cuire diluables à l'eau, qui contiennent en tant que liant un mélange de résines polyuréthane, polyester et, le cas échéant, aminoplaste, par mélange et, le cas échéant, par dispersion des éléments individuels, caractérisé en ce que les laques à cuire en tant que liant contiennent une combinaison

(I) de 20 à 70 % en poids, de préférence de 40 à 60 % en poids d'une résine polyuréthane, qui présente un indice d'acidité de 15 à 35, de préférence de 20 à 30,

(II) de 20 à 70 % en poids, de préférence de 25 à 50 % en poids d'un polyester diluable à l'eau, modifié à la résine époxyde et

(III) de 0 à 20 % en poids d'une résine aminoplaste diluable à l'eau

la somme des composants (I) à (III) étant à chaque fois de 100 % en poids et

1.) la résine polyuréthane (I) étant préparée, en ce qu'à partir

a) de 4,0 à 1,9 moles de polyétherdiols et/ou de polyesterdiols ayant un poids moléculaire moyen au nombre de 400 à 3 000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de former des anions, qui est neutralise avant ou après l'introduction du composant (Ic) dans la molécule de polyuréthane,

on prépare un produit intermédiaire présentant des groupes isocyanates terminaux, dont on fait réagir ensuite les groupes isocyanates libres au moins en partie avec un polyol contenant au moins trois groupes hydroxyles, de préférence un triol, et

2.) le polyester (II) étant préparé en ce que

(A) à partir

($a_1$) d'au moins un acide polycarboxylique contenant au moins trois groupes carboxyles, respectivement un dérivé réactif de cet acide et/ou

($a_2$) d'au moins un polyol présentant au moins un groupe carboxyle et

($a_3$) d'au moins un acide polycarboxylique contenant deux groupes carboxyles, respectivement un dérivé réactif de cet acide et

($a_4$) d'au moins un polyol,

- au moins 10 % en moles, de préférence 30-70 % en moles des composants utilisés ($a_1$), ($a_2$), ($a_3$) et ($a_4$) (par rapport à ($a_1$) + ($a_2$) + ($a_3$) + ($a_4$) = 100 % en moles) contenant au moins un élément de structure (cyclo)aliphatique présentant au moins six atomes de C -

on synthétise un polyester, qui présente un poids moléculaire moyen (moyenne au nombre) de moins de 2000, de préférence de 500 à 1500, un indice d'acidité de 35-240, de préférence de 50-120, un indice OH de 56-320, de préférence 80-200, et dans lequel tous les composants ($a_1$) et ($a_3$) sont condensés par l'intermédiaire d'au moins deux groupes carboxyles et en ce que

(B) l'on fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau.

2. Procédé de préparation de laques à cuire diluables à l'eau, qui contiennent en tant que liant un mélange de résines polyuréthane, polyester et, le cas échéant, aminoplaste, par mélange et, le cas échéant, par dispersion des éléments individuels, caractérisé en ce que les laques à cuire en tant que liant contiennent

(I) de 40 à 80 % en poids, de préférence de 50 à 70 % en poids d'une résine polyuréthane, qui présente un indice d'acidité de 15 à 35, de préférence de 20 à 30,

(II) de 10 à 40 % en poids, de préférence de 10 à 25 % en poids d'un polyester modifié à la résine époxyde diluable à l'eau et

(III) de 0 à 15 % en poids d'une résine aminoplaste diluable à l'eau

(IV) de 0 à 10 % en poids d'une résine polyester diluable à l'eau,

la somme des composants (I) à (IV) étant à chaque fois de 100 % en poids et

1.) la résine polyuréthane (I) étant préparée, en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on prépare un produit intermédiaire présentant des groupes isocyanates terminaux, dont on fait réagir ensuite les groupes isocyanates libres au moins en partie avec un polyol contenant au moins trois groupes hydroxyles, de préférence un triol, et

2.) le polyester (II) étant préparé en ce que

(A) à partir

(a$_1$) d'au moins un acide polycarboxylique contenant au moins trois groupes carboxyles, respectivement un dérivé réactif de cet acide et/ou

(a$_2$) d'au moins un polyol présentant au moins un groupe carboxyle et

(a$_3$) d'au moins un acide polycarboxylique contenant deux groupes carboxyles, respectivement un dérivé réactif de cet acide et

(a$_4$) d'au moins un polyol,

- au moins 10 % en moles, de préférence 30-70 % en moles des composants utilisés (a$_1$), (a$_2$), (a$_3$) et (a$_4$) (par rapport à (a$_1$) + (a$_2$) + (a$_3$) + (a$_4$) = 100 % en moles) contenant au moins un élément de structure (cyclo)aliphatique présentant au moins six atomes de C -

on synthétise un polyester, qui présente un poids moléculaire moyen (moyenne au nombre) de moins de 2 000, de préférence de 500 à 1500, un indice d'acidité de 35-240, de préférence de 50-120, un indice OH de 56-320, de préférence 80-200, et dans lequel tous les composants (a$_1$) et (a$_3$) sont condensés par l'intermédiaire d'au moins deux groupes carboxyles et en ce que

(B) l'on fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau.

3.  Procédé selon la revendication 1 ou 2, caractérisé en ce qu'une partie des composants (a$_1$) et/ou (a$_3$) se compose d'au moins un acide gras polymère, de préférence d'un acide gras dimère.

4.  Procédé selon les revendications 1 à 3, caractérisé en ce que l'on fait réagir le polyester produit dans l'étape (A) avec de 0,3 à 1,5, de préférence de 0,5 à 1,0 équivalents par molécule de polyester d'un produit de réaction présentant au moins un groupe époxyde par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique, de préférence un acide monocarboxylique ou polycarboxylique ayant un élément de structure (cyclo)-aliphatique présentant au moins 6 atomes de C.

5.  Procédé selon les revendications 1 à 4, caractérisé en ce que l'on fait réagir le polyester produit dans l'étape (A) avec de 0,3 à 1,5, de préférence de 0,5 à 1,0 équivalents par molécule de polyester d'un produit de réaction présentant au moins un groupe époxy-de par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique ayant un élément de structure (cyclo)aliphatique présentant au moins 18 atomes de C, de préférence d'un acide gras polymère, en particulier d'un acide gras dimère.

6.  Procédé de laquage de carrosseries d'automobiles, lors duquel

(1) on applique et on cuit une laque pour trempage électrophorétique,

(2) on applique et on cuit un matériau de pigment de charge et

EP 0 339 433 B1

(3) on applique et on cuit un émail de finition monocouche ou multicouche,
caractérisé en ce que l'on utilise en tant que matériau de pigment de charge une laque à cuire diluable à l'eau qui contient

(I) de 20 à 70 % en poids, de préférence de 40 à 60 % en poids d'une résine polyuréthane, qui présente un indice d'acidité de 15 à 35, de préférence de 20-30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 20 à 70 % en poids, de préférence de 25 à 50 % en poids d'un polyester diluable à l'eau, modifié à la résine époxyde, qui peut être préparé en ce que

(A) à partir

(a$_1$) d'au moins un acide polycarboxylique contenant au moins trois groupes carboxyles, respectivement un dérivé réactif de cet acide et/ou

(a$_2$) d'au moins un polyol présentant au moins un groupe carboxyle et

(a$_3$) d'au moins un acide polycarboxylique contenant deux groupes carboxyles, respectivement un dérivé réactif de cet acide et

(a$_4$) d'au moins un polyol,

- au moins 10 % en moles, de préférence 30-70 % en moles des composants utilisés (a$_1$), (a$_2$), (a$_3$) et (a$_4$) (par rapport à (a$_1$) + (a$_2$) + (a$_3$) + (a$_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-320, de préférence 80-200, et dans lequel tous les composants (a$_1$) et (a$_3$) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau, et

(III) de 0 à 20 % en poids d'une résine aminoplaste diluable à l'eau,
la somme des composants (I) à (III) étant à chaque fois de 100 % en poids.

7. Procédé de laquage de carrosseries d'automobiles, lors duquel

(1) on applique et on cuit une laque pour trempage électrophorétique,

(2) on applique et on sèche une couche intermédiaire antigravillonnage,

(3) on applique et on cuit un pigment de charge et

(4) on applique et on cuit un émail de finition monocouche ou multicouche,

caractérisé en ce que l'on utilise en tant que couche intermédiaire antigravillonnage une laque à cuire diluable à l'eau, qui en tant que liant contient une combinaison

(I) de 40 à 80 % en poids, de préférence de 50 à 70 % en poids d'une résine polyuréthane, qui présente un indice d'acidité de 15 à 35, de préférence de 20 à 30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de

42

former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 10 à 40 % en poids, de préférence de 10 à 25 % en poids d'un polyester diluable à l'eau, modifié à la résine époxyde, qui peut être préparé en ce que

(A) à partir

($a_1$) d'au moins un acide polycarboxylique contenant au moins trois groupes carboxyles, respectivement un dérivé réactif de cet acide et/ou

($a_2$) d'au moins un polyol présentant au moins un groupe carboxyle et

($a_3$) d'au moins un acide polycarboxylique contenant deux groupes carboxyles, respectivement un dérivé réactif de cet acide et

($a_4$) d'au moins un polyol,

- au moins 10 % en moles, de préférence 30-70 % en moles des composants utilisés ($a_1$), ($a_2$), ($a_3$) et ($a_4$) (par rapport à ($a_1$) + ($a_2$) + ($a_3$) + ($a_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-230, de préférence 80-200, et dans lequel tous les composants ($a_1$) et ($a_3$) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau,

(III) de 0 à 15 % en poids d'une résine aminoplaste diluable à l'eau, et

(IV) de 0 à 10 % en poids d'une résine polyester diluable à l'eau,

la somme des composants (I) à (IV) étant à chaque fois de 100 % en poids.

**8.** Procédé selon la revendication 6 ou 7, caractérisé en ce qu'une partie des composants ($a_1$) et/ou ($a_3$) se compose d'au moins un acide gras polymère, de préférence d'un acide gras dimère.

**9.** Procédé selon les revendications 6 à 8, caractérisé en ce que l'on a fait réagir le polyester produit dans l'étape (A) avec de 0,3 à 1,5, de préférence de 0,5 à 1,0 équivalents par molécule de polyester d'un produit de réaction présentant au moins un groupe époxyde par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique, de préférence un acide monocarboxylique ou polycarboxylique ayant un élément de structure (cyclo)-aliphatique présentant au moins 6 atomes de C.

**10.** Procédé selon les revendications 6 à 9, caractérisé en ce que l'on a fait réagir le polyester produit dans l'étape (A) avec de 0,3 à 1,5, de préférence de 0,5 à 1,0 équivalents par molécule de polyester d'un produit de réaction présentant au moins un groupe époxyde par molécule d'une résine époxyde à base d'un bisphénol, de préférence le bisphénol A, avec un poids équivalent d'époxyde de 170 à 1000, de préférence de 170 à 500, et d'un acide monocarboxylique ou polycarboxylique (cyclo)aliphatique ayant un élément de structure (cyclo)aliphatique présentant au moins 18 atomes de C, de préférence d'un acide gras polymère, en particulier d'un acide gras dimère.

**11.** Utilisation d'une combinaison

(I) de 20 à 70 % en poids, de préférence de 40 à 60 % en poids d'une résine polyuréthane, qui présente un indice d'acidité de 15 à 35, de préférence de 20-30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,7 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 20 à 70 % en poids, de préférence de 25 à 50 % en poids d'un polyester diluable à l'eau, modifié à la résine époxyde, qui peut être préparé en ce que

(A) à partir

(a$_1$) d'au moins un acide polycarboxylique contenant au moins trois groupes carboxyles, respectivement un dérivé réactif de cet acide et/ou

(a$_2$) d'au moins un polyol présentant au moins un groupe carboxyle et

(a$_3$) d'au moins un acide polycarboxylique contenant deux groupes carboxyles, respectivement un dérivé réactif de cet acide et

(a$_4$) d'au moins un polyol,

- au moins 10 % en moles, de préférence 30-70 % en moles des composants utilisés (a$_1$), (a$_2$), (a$_3$) et (a$_4$) (par rapport à (a$_1$) + (a$_2$) + (a$_3$) + (a$_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-320, de préférence 80-200, et dans lequel tous les composants (a$_1$) et (a$_3$) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau, et

(III) de 0 à 20 % en poids d'une résine aminoplaste diluable à l'eau,

la somme des composants (I) à (III) étant à chaque fois de 100 % en poids, en tant que liant dans les laques à cuire diluables à l'eau, qui sont utilisées lors du laquage de carrosseries d'automobiles pour la fabrication de couches de pigment de charge.

12. Utilisation d'une combinaison

(I) de 40 à 80 % en poids, de préférence de 50 à 70 % en poids d'une résine polyuréthane, qui présente un indice d'acidité de 15 à 35, de préférence de 20 à 30, et peut se préparer en ce qu'à partir

a) de 4,0 à 1,9 moles de polyétherdiols et/ou de polyesterdiols ayant un poids moléculaire moyen au nombre de 400 à 3000,

b) de 5,6 à 11,2 moles de diisocyanates et

c) de 1,6 à 3,6 moles de composés, qui contiennent deux groupes réactifs vis-à-vis des groupes isocyanates, au moins une partie de ces composés présentant au moins un groupe capable de former des anions, qui est neutralisé avant ou après l'introduction du composant (Ic) dans la molécule de polyuréthane,

on a préparé un produit intermédiaire présentant des groupes isocyanates terminaux, dont on a fait réagir ensuite les groupes isocyanates libres au moins en partie avec un polyol contenant au moins trois groupes hydroxyles, de préférence avec un triol,

(II) de 10 à 40 % en poids, de préférence de 10 à 25 % en poids d'un polyester diluable à l'eau, modifié à la résine époxyde, qui peut être préparé en ce que

(A) à partir

(a$_1$) d'au moins un acide polycarboxylique contenant au moins trois groupes carboxyles, respectivement un dérivé réactif de cet acide et/ou

(a$_2$) d'au moins un polyol présentant au moins un groupe carboxyle et

44

(a$_3$) d'au moins un acide polycarboxylique contenant deux groupes carboxyles, respectivement un dérivé réactif de cet acide et

(a$_4$) d'au moins un polyol,

- au moins 10 % en moles, de préférence 30-70 % en moles des composants utilisés (a$_1$), (a$_2$), (a$_3$) et (a$_4$) (par rapport à (a$_1$) + (a$_2$) + (a$_3$) + (a$_4$) = 100 % en moles) contenant au moins un élément de structure (cyclo)aliphatique présentant au moins six atomes de C -

on a synthétisé un polyester, qui présente un poids moléculaire moyen (moyenne au nombre) de moins de 2000, de préférence de 500 à 1500, un indice d'acidité de 35-240, de préférence de 50-120, un indice OH de 56-230, de préférence 80-200, et dans lequel tous les composants (a$_1$) et (a$_3$) sont condensés par l'intermédiaire d'au moins deux groupes carboxyles et en ce que

(B) l'on a fait ensuite réagir ce polyester ainsi produit avec de 0,3 à 1,5, de préférence de 0,5 à 1,0 équivalents par molécule de polyester d'une résine époxyde présentant un poids équivalent d'époxyde de 170 à 1000, de préférence de 170 à 500 à base d'un bisphénol, de préférence le bisphénol A, et/ou avec un dérivé de cette résine époxyde contenant au moins un groupe époxyde par molécule dans des conditions de réaction lors desquelles essentiellement seuls les groupes carboxyles réagissent avec les groupes époxydes, pour former un polyester modifié à la résine époxyde, qui est présent, après neutralisation d'au moins une partie des groupes hydroxyles libres, sous forme soluble dans l'eau,

(III) de 0 à 15 % en poids d'une résine aminoplaste diluable à l'eau, et

(IV) de 0 à 10 % en poids d'une résine polyester diluable à l'eau,

la somme des composants (I) à (IV) étant à chaque fois de 100 % en poids, en tant que liant dans des laques à cuire diluables à l'eau, qui sont utilisées lors du laquage de carrosseries d'automobiles pour la fabrication de couches intermédiaires antigravillonnage.